# EUROPEAN PATENT APPLICATION

(11) **EP 4 586 565 A1**
(43) Date of publication of application: **16.07.2025**
(21) Application number: 22957813.3
(22) Date of filing: 09.09.2022
(51) Int. Cl.: H04L 27/00

(54) **CARRIER PHASE-BASED POSITIONING METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/118266
(87) International publication number: WO 2024/050845

(57) **Abstract**

The present disclosure relates to a carrier phase-based positioning method and apparatus, and a storage medium. The method comprises: a first device sends a positioning report to a second device, the positioning report comprising carrier phase information and a frequency domain resource identifier, wherein the carrier phase information comprises at least one of an integral period part and a decimal period part, and the frequency domain resource identifier is used for indicating a frequency domain resource identifier corresponding to the carrier phase information. Carrier phase information of different frequency domain resources is identified by means of the frequency domain resource identifier in the positioning report, so that the integral period part of a carrier phase can be accurately determined by using the carrier phase information on different frequency domain resources, thereby improving the positioning accuracy of carrier phase-based positioning.

## Description

### TECHNICAL FIELD

The present disclosure relates to the field of communication technologies, and in particular, to a positioning method based on a carrier phase, an apparatus, and a storage medium.

### BACKGROUND

In the related art, a positioning method based on a carrier phase is supported to improve positioning accuracy.

Among them, in the positioning method based on a carrier phase, the content that needs to be measured and reported includes a carrier phase value, where the carrier phase value includes at least one of a fractional part and a whole cycle part of the carrier phase. Among them, the fractional part of the carrier phase refers to a fractional part with a phase cycle that is less than a whole cycle, and the whole cycle part refers to the number of the phase cycles that is an integer number.

However, when positioning is performed, since it is unclear that how many whole cycles may exist before the current periodicity of the reference signal, it leads to the problem of ambiguity of whole cycles, thus there is a deviation in the positioning result, and the accuracy is reduced.

### SUMMARY

In order to overcome the problems existing in the related art, the present disclosure provides a positioning method based on a carrier phase, an apparatus, and a storage medium.

According to a first aspect of the embodiments of the present disclosure, there is provided a positioning method based on a carrier phase. The method is applied to a first device, and includes: sending a positioning report to a second device, where the positioning report includes carrier phase information and a frequency domain resource identifier, the carrier phase information includes at least one of a whole cycle part and a fractional part, and the frequency domain resource identifier is used to indicate a frequency domain resource identifier corresponding to the carrier phase information.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

In an implementation, a number of a frequency domain resource is one or more.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In an implementation, the difference between the carrier phase measurement values obtained by performing measurement based on more than one positioning signal includes at least one of: a difference between carrier phase measurement values obtained by performing measurement based on more than one downlink positioning signal, a difference between carrier phase measurement values obtained by performing measurement based on more than one uplink positioning signal, or a difference between carrier phase measurement values obtained by performing measurement based on one downlink positioning signal and one uplink positioning signal.

In an implementation, the carrier phase information includes the difference between the carrier phase measurement values obtained by performing measurement based on more than one positioning signal; and the difference between the carrier phase measurement values obtained by performing measurement based on more than one positioning signal includes: the difference between the carrier phase measurement values obtained by performing measurement based on more than one positioning signal corresponding to one frequency domain resource identifier, or the difference between the carrier phase measurement values obtained by performing measurement based on more than one positioning signal corresponding to more than one frequency domain resource identifier.

In an implementation, the more than one positioning signal includes a reference positioning signal.

In an implementation, the more than one positioning signal corresponds to a same transmission reception point (TRP), or corresponds to different TRPs.

In an implementation, the more than one positioning signal corresponds to different TRPs, and the different TRPs include a reference TRP.

In an implementation, the carrier phase information includes the difference between the carrier phase measurement values obtained by performing measurement on different frequency domain resources based on one positioning signal; and the difference between the carrier phase measurement values obtained by performing measurement on different frequency domain resources based on one positioning signal corresponds to more than one frequency domain resource identifier.

In an implementation, the method further includes: receiving configuration information sent by the second device, where the configuration information is used to indicate a configuration parameter of a positioning signal.

In an implementation, the configuration information includes at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signa, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a starting physical resource block (PRB) position of the positioning signal, a transmission power for the positioning signal, or a pathloss reference signal of the positioning signal.

In an implementation, the positioning report further includes at least one of: carrier phase error group information, measurement result information, a probability that a path corresponding to the carrier phase information is a line-of-sight (LoS) path, or Doppler parameter information.

In an implementation, the measurement result information includes at least one of: a reference signal receiving power (RSRP), an angle of arrival (AoA), an angle of departure (AoD), a time of arrival (ToA); a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or a Tx Rx time error group (TREG) of the first device or the second device.

In an implementation, the positioning signal includes a positioning reference signal (PRS) or a sounding reference signal (SRS).

In an implementation, the first device is a terminal, and the second device is a core network device; or, the first device is a TRP, and the second device is a core network device.

According to a second aspect of the embodiments of the present disclosure, there is provided a positioning method based on a carrier phase. The method is applied to a second device, and includes: receiving a positioning report sent by a first device, where the positioning report includes carrier phase information and a frequency domain resource identifier, the carrier phase information includes at least one of a whole cycle part and a fractional part, and the frequency domain resource identifier is used to indicate a frequency domain resource identifier corresponding to the carrier phase information.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

In an implementation, a number of a frequency domain resource is one or more.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In an implementation, the difference between the carrier phase measurement values obtained by performing measurement based on more than one positioning signal includes at least one of: a difference between carrier phase measurement values obtained by performing measurement based on more than one downlink positioning signal, a difference between carrier phase measurement values obtained by performing measurement based on more than one uplink positioning signal, or a difference between carrier phase measurement values obtained by performing measurement based on one downlink positioning signal and one uplink positioning signal.

In an implementation, the carrier phase information includes the difference between the carrier phase measurement values obtained by performing measurement based on more than one positioning signal; and the difference between the carrier phase measurement values obtained by performing measurement based on more than one positioning signal includes: the difference between the carrier phase measurement values obtained by performing measurement based on more than one positioning signal corresponding to one frequency domain resource identifier, or the difference between the carrier phase measurement values obtained by performing measurement based on more than one positioning signal corresponding to more than one frequency domain resource identifier.

In an implementation, the more than one positioning signal include a reference positioning signal.

In an implementation, the more than one positioning signal correspond to a same transmission reception point (TRP), or corresponds to different TRPs.

In an implementation, the more than one positioning signal correspond to different TRPs, and the different TRPs include a reference TRP.

In an implementation, the carrier phase information includes the difference between the carrier phase measurement values obtained by performing measurement on different frequency domain resources based on one positioning signal; and the difference between the carrier phase measurement values obtained by performing measurement on different frequency domain resources based on one positioning signal corresponds to more than one frequency domain resource identifier.

In an implementation, the method further includes: sending configuration information to the first device, where the configuration information is used to indicate a configuration parameter of a positioning signal.

In an implementation, the configuration information includes at least one of: a periodicity of the positioning signal, a slot offset of the positioning signal, a repetition number of the positioning signal in a single cycle, a time interval between every two repeated transmissions of the positioning signal, a number of symbols occupied by the positioning signal, a muting pattern of the positioning signal, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a position of a start physical resource block (PRB) of the positioning signal, a transmission power for the positioning signal, or a pathloss reference signal of the positioning signal.

In an implementation, the positioning report further includes at least one of: carrier phase error group information, measurement result information, a probability that a path corresponding to the carrier phase information is a line-of-sight (LoS) path, or Doppler parameter information.

In an implementation, the measurement result information includes at least one of: a reference signal receiving power (RSRP), an angle of arrival (AoA), an angle of departure (AoD), a time of arrival (ToA), a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or a Tx Rx time error group (TREG) of the first device or the second device.

In an implementation, the positioning signal includes a positioning reference signal (PRS) or a sounding reference signal (SRS).

In an implementation, the first device is a terminal, and the second device is a core network device; or, the first device is a TRP, and the second device is a core network device.

According to a third aspect of the embodiments of the present disclosure, there is provided a positioning apparatus based on a carrier phase, including: a sending module, configured to send a positioning report to a second device, where the positioning report includes carrier phase information and a frequency domain resource identifier, the carrier phase information includes at least one of a whole cycle part and a fractional part, and the frequency domain resource identifier is used to indicate a frequency domain resource identifier corresponding to the carrier phase information.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

In an implementation, a number of a frequency domain resource is one or more.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In an implementation, the difference between the carrier phase measurement values obtained by performing measurement based on more than one positioning signal includes at least one of: a difference between carrier phase measurement values obtained by performing measurement based on more than one downlink positioning signal, a difference between carrier phase measurement values obtained by performing measurement based on more than one uplink positioning signal, or a difference between carrier phase measurement values obtained by performing measurement based on one downlink positioning signal and one uplink positioning signal.

In an implementation, the carrier phase information includes the difference between the carrier phase measurement values obtained by performing measurement based on more than one positioning signal; and the difference between the carrier phase measurement values obtained by performing measurement based on more than one positioning signal includes: the difference between the carrier phase measurement values obtained by performing measurement based on more than one positioning signal corresponding to one frequency domain resource identifier, or the difference between the carrier phase measurement values obtained by performing measurement based on more than one positioning signal corresponding to more than one frequency domain resource identifier.

In an implementation, the more than one positioning signal includes a reference positioning signal.

In an implementation, the more than one positioning signal corresponds to a same transmission reception point (TRP), or corresponds to different TRPs.

In an implementation, the more than one positioning signal corresponds to different TRPs, and the different TRPs include a reference TRP.

In an implementation, the carrier phase information includes the difference between the carrier phase measurement values obtained by performing measurement on different frequency domain resources based on one positioning signal; and the difference between the carrier phase measurement values obtained by performing measurement on different frequency domain resources based on one positioning signal corresponds to more than one frequency domain resource identifier.

In an implementation, the apparatus further includes: a receiving module, configured to receive configuration information sent by the second device, where the configuration information is used to indicate a configuration parameter of a positioning signal.

In an implementation, the configuration information includes at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signa, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a starting physical resource block (PRB) position of the positioning signal, a transmission power for the positioning signal, or a pathloss reference signal of the positioning signal.

In an implementation, the positioning report further includes at least one of: carrier phase error group information, measurement result information, a probability that a path corresponding to the carrier phase information is a line-of-sight (LoS) path, or Doppler parameter information.

In an implementation, the measurement result information includes at least one of: a reference signal receiving power (RSRP), an angle of arrival (AoA), an angle of departure (AoD), a time of arrival (ToA); a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or a Tx Rx time error group (TREG) of the first device or the second device.

In an implementation, the positioning signal includes a positioning reference signal (PRS) or a sounding reference signal (SRS).

In an implementation, the first device is a terminal, and the second device is a core network device; or, the first device is a TRP, and the second device is a core network device.

According to a fourth aspect of the embodiments of the present disclosure, there is provided a positioning apparatus based on a carrier phase, including: a receiving module, configured to receive a positioning report sent by a first device, where the positioning report includes carrier phase information and a frequency domain resource identifier, the carrier phase information includes at least one of a whole cycle part and a fractional part, and the frequency domain resource identifier is used to indicate a frequency domain resource identifier corresponding to the carrier phase information.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

In an implementation, a number of a frequency domain resource is one or more.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In an implementation, the difference between the carrier phase measurement values obtained by performing measurement based on more than one positioning signal includes at least one of: a difference between carrier phase measurement values obtained by performing measurement based on more than one downlink positioning signal, a difference between carrier phase measurement values obtained by performing measurement based on more than one uplink positioning signal, or a difference between carrier phase measurement values obtained by performing measurement based on one downlink positioning signal and one uplink positioning signal.

In an implementation, the carrier phase information includes the difference between the carrier phase measurement values obtained by performing measurement based on more than one positioning signal; and the difference between the carrier phase measurement values obtained by performing measurement based on more than one positioning signal includes: the difference between the carrier phase measurement values obtained by performing measurement based on more than one positioning signal corresponding to one frequency domain resource identifier, or the difference between the carrier phase measurement values obtained by performing measurement based on more than one positioning signal corresponding to more than one frequency domain resource identifier.

In an implementation, the more than one positioning signal include a reference positioning signal.

In an implementation, the more than one positioning signal correspond to a same transmission reception point (TRP), or corresponds to different TRPs.

In an implementation, the more than one positioning signal correspond to different TRPs, and the different TRPs include a reference TRP.

In an implementation, the carrier phase information includes the difference between the carrier phase measurement values obtained by performing measurement on different frequency domain resources based on one positioning signal; and the difference between the carrier phase measurement values obtained by performing measurement on different frequency domain resources based on one positioning signal corresponds to more than one frequency domain resource identifier.

In an implementation, the apparatus further includes: a sending module, configured to send configuration information to the first device, where the configuration information is used to indicate a configuration parameter of a positioning signal.

In an implementation, the configuration information includes at least one of: a periodicity of the positioning signal, a slot offset of the positioning signal, a repetition number of the positioning signal in a single cycle, a time interval between every two repeated transmissions of the positioning signal, a number of symbols occupied by the positioning signal, a muting pattern of the positioning signal, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a position of a start physical resource block (PRB) of the positioning signal, a transmission power for the positioning signal, or a pathloss reference signal of the positioning signal.

In an implementation, the positioning report further includes at least one of: carrier phase error group information, measurement result information, a probability that a path corresponding to the carrier phase information is a line-of-sight (LoS) path, or Doppler parameter information.

In an implementation, the measurement result information includes at least one of: a reference signal receiving power (RSRP), an angle of arrival (AoA), an angle of departure (AoD), a time of arrival (ToA), a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or a Tx Rx time error group (TREG) of the first device or the second device.

In an implementation, the positioning signal includes a positioning reference signal (PRS) or a sounding reference signal (SRS).

In an implementation, the first device is a terminal, and the second device is a core network device; or, the first device is a TRP, and the second device is a core network device.

According to a fifth aspect of the embodiments of the present disclosure, there is provided a positioning apparatus based on a carrier phase, including a processor and a memory configured to store an executable instruction by the processor, where the processor is configured to perform the method according to any one of the first aspect.

According to a sixth aspect of the embodiments of the present disclosure, there is provided a positioning apparatus based on a carrier phase, including a processor and a memory configured to store an executable instruction by the processor, where the processor is configured to perform the method according to any one of the second aspects.

According to a seventh aspect of the embodiments of the present disclosure, there is provided a non-transitory computer-readable storage medium; when an instruction in the storage medium is executed by a processor of a first device, the first device is caused to perform the method of any one of the first aspect.

According to an eighth aspect of the embodiments of the present disclosure, there is provided a non-transitory computer-readable storage medium; when an instruction in the storage medium is executed by a processor of a second device, the second device is caused to perform the method of any one of the second aspect.

The technical solution provided in the embodiments of the present disclosure may include the following beneficial effects: the positioning report includes carrier phase information and a frequency domain resource identifier, and the frequency domain resource identifier is used to indicate a frequency domain resource identifier corresponding to the carrier phase information. Therefore, in the present disclosure, the carrier phase information of different frequency domain resources may be identified by using the frequency domain resource identifier in the positioning report, so that the whole cycle part of the carrier phase may be accurately determined by using the carrier phase information on different frequency domain resources, thus improving the positioning accuracy for performing positioning based on the carrier phase.

It is to be understood that both the foregoing general description and the following detailed description are exemplary and explanatory only, and are not restrictions of the present disclosure.

### BRIEF DESCRIPTION OF THE DRAWINGS

The accompanying drawings here, which are incorporated in and constitute a part of the description, illustrate embodiments consistent with the present disclosure, and, together with the description, serve to explain the principles of the present disclosure.
FIG. 1 is a schematic diagram of a wireless communication system shown according to an example embodiment.
FIG. 2 is a flowchart of a positioning method based on a carrier phase shown according to an example embodiment.
FIG. 3 is a schematic diagram of positioning based on a carrier phase shown according to an example embodiment.
FIG. 4 is another schematic diagram of positioning based on a carrier phase shown according to an example embodiment.
FIG. 5 is another schematic diagram of positioning based on a carrier phase shown according to an example embodiment.
FIG. 6 is another schematic diagram of positioning based on a carrier phase shown according to an example embodiment.
FIG. 7 is another schematic diagram of positioning based on a carrier phase shown according to an example embodiment.
FIG. 8 is another schematic diagram of positioning based on a carrier phase shown according to an example embodiment.
FIG. 9 is another schematic diagram of positioning based on a carrier phase shown according to an example embodiment.
FIG. 10 is another schematic diagram of positioning based on a carrier phase shown according to an example embodiment.
FIG. 11 is another schematic diagram of positioning based on a carrier phase shown according to an example embodiment.
FIG. 12 is another schematic diagram of positioning based on a carrier phase shown according to an example embodiment.
FIG. 13 is another flowchart of a positioning method based on a carrier phase shown according to an example embodiment.
FIG. 14 is another flowchart of a positioning method based on a carrier phase shown according to an example embodiment.
FIG. 15 is another flowchart of a positioning method based on a carrier phase shown according to an example embodiment.
FIG. 16 is another flowchart of a positioning method based on a carrier phase shown according to an example embodiment.
FIG. 17 is another flowchart of a positioning method based on a carrier phase shown according to an example embodiment.
FIG. 18 is a schematic diagram of a positioning apparatus based on a carrier phase shown according to an example embodiment.
FIG. 19 is another schematic diagram of a positioning apparatus based on a carrier phase shown according to an example embodiment.
FIG. 20 is another schematic diagram of a positioning apparatus based on a carrier phase shown according to an example embodiment.
FIG. 21 is another schematic diagram of a positioning apparatus based on a carrier phase shown according to an example embodiment.

### DETAILED DESCRIPTION

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present disclosure.

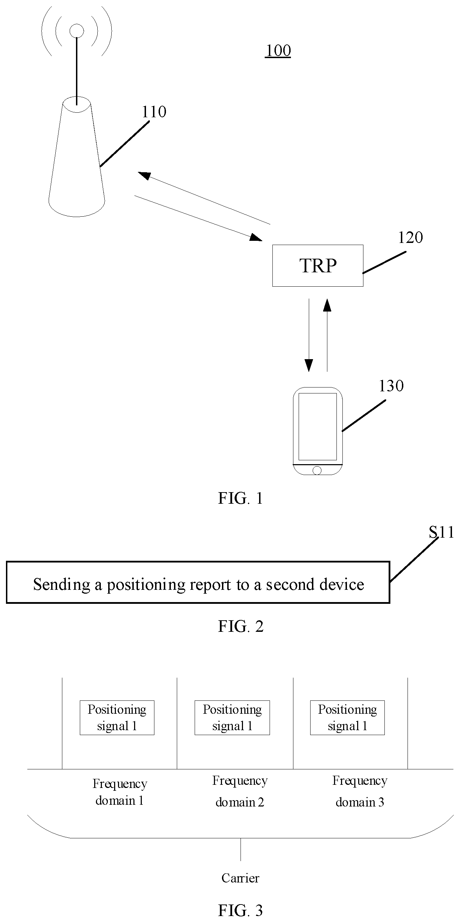

The positioning method based on a carrier phase involved in the present disclosure may be applied to the wireless communication system shown in FIG. 1. As can be seen from FIG. 1, the wireless communication system 100 may include a network device 110, a transmission reception point (TRP) 120, and a terminal 130. The network device 110, the TRP 120 and the terminal 130 may perform communication by using a radio resource, for example, to transmit and receive corresponding information.

It may be understood that the wireless communication system shown in FIG. 1 is merely illustrative, and the wireless communication system may further include other network devices. For example, the wireless communication system may further include a core network device, a wireless relay device, a wireless backhaul device, or the like, which are not shown in FIG. 1. The number of the network device and the number of the terminal included in the wireless communication system are not limited in the embodiments of the present disclosure.

It may be further understood that the wireless communication system in the embodiments of the present disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), Orthogonal Frequency-Division Multiple Access (OFDMA), single carrier FDMA (SC-FDMA), carrier sense multiple access with collision avoidance. According to factors such as capacity, rate, delay, or the like of different networks, the network may be classified into a 2-generation (2G) network, a 3G network, a 4G network, or a future evolved network such as a 5G network. The 5G network may also be referred to as a new radio (NR) network. For ease of description, in the present disclosure, the wireless communication network may sometimes be called as a network for short.

Furthermore, the network device 110 involved in the present disclosure may also be referred to as a wireless access network device or a core network device. The wireless access network device may be a base station, an evolved node B (base station), a home base station, an access point (AP) in a wireless fidelity (WIFI) system, a wireless relay node, a wireless backhaul node, a transmission point (TP), a transmission and reception point (TRP), or the like; or, the wireless access network device may also be a gNB in a NR system, or may be a component or a part of devices that constitutes a base station. When the communication system is a vehicle-to-everything (V2X) communication system, the network device may also be a vehicle-mounted device. It should be understood that, in the embodiments of the present disclosure, specific technologies and specific device forms used for the network device are not limited.

In some embodiments, the core network device may include a location management function network element. Optionally, the location management function network element includes a location server, and the location server may be implemented as any one of the following: a location management function (LMF) enhanced serving mobile location center (E-SMLC), a secure user plane location (SUPL), or an SUPL location platform (SUPL LP).

Furthermore, the TRP 120 involved in the present disclosure may transmit beams in different directions to the terminal 130 for performing wireless communication.

Furthermore, the terminal 130 involved in the present disclosure may also be referred to as a terminal device, a user equipment (UE), a mobile station (MS), a mobile terminal (MT), or the like. The terminal 130 is a device that provides voice and/or data connectivity to a user, for example, the terminal may be a handheld device or a vehicle-mounted device having a wireless connection function. At present, some examples of the terminal include a mobile phone, a pocket personal computer (PPC), a palmtop computer, a personal digital assistant (PDA), a notebook computer, a tablet computer, a wearable device, a vehicle-mounted device, or the like. In addition, when the communication system is a vehicle-to-everything (V2X) communication system, the terminal device may also be a vehicle-mounted device. It should be understood that the specific technology and the specific device form used for the terminal are not limited in the embodiments of the present disclosure.

In the related art, in the discussion on the project proposal of Rel-18, it is discussed to use the positioning method based on a carrier phase to improve the positioning accuracy. Among them, the content that needs to be measured and reported in the positioning method based on a carrier phase includes at least one of a fractional part and a whole cycle part (or referred as whole cycles) of the carrier phase. The fractional part of the carrier phase refers to a fractional part that is less than a whole cycle. The whole cycle part is the number of the whole cycles other than that being less than one cycle, that is, the whole cycle part refers to the number of the phase cycle that is an integer cycle. It should be noted that the carrier phase measurement value in all embodiments of the present disclosure includes at least one of a whole cycle part and a fractional part. Although the whole cycle part may not be directly obtained by performing measurement, but is obtained by calculation based on the measurement value and some algorithms, the carrier phase measurement value in all embodiments of the present disclosure may also include the whole cycle part.

However, when positioning is performed, since it is unclear that how many whole cycles may exist before the current periodicity of the reference signal, it leads to the problem of ambiguity of whole cycles, thus there is a deviation in the positioning result, and the accuracy is reduced. In the related art, in order to solve the problem of ambiguity of whole cycles, for example, one solution in the Global Positioning System (GPS) is to transmit a reference signal by using more than one carrier frequency. However, the wavelengths of the more than one carrier frequency are different, and the transmission distances experienced are the same, so that the problem of ambiguity of whole cycles may be better solved.

Among them, in order to solve the problem of ambiguity of whole cycles, a multi-carrier frequency may be introduced into NR. In NR, the multi-carrier frequency may be different small frequency domain resources in one carrier. In this case, the related positioning report needs to be enhanced, that is, a frequency domain resource identifier corresponding to the carrier phase measurement result is included.

Therefore, the present disclosure provides a positioning method based on a carrier phase, where carrier phase information of different frequency domain resources is identified by using a frequency domain resource identifier in a positioning report, and then the whole cycle part of the carrier phase may be accurately determined by using the carrier phase information on different frequency domain resources, thus improving the positioning accuracy for performing positioning based on a carrier phase.

It should be noted that the positioning method based on a carrier phase provided in the present disclosure may be a downlink positioning method. That is, a terminal receives a downlink positioning signal configuration from a network device (for example, a core network device or a wireless access network device), and then the terminal receives and performs measurement on a downlink positioning signal transmitted by each TRP at the wireless access network device. The terminal calculates its own location; or, the terminal sends the measurement report to the core network, and the core network calculates the location of the terminal.

Certainly, the positioning method based on a carrier phase provided in the present disclosure may alternatively be an uplink positioning method. That is, the terminal receives an uplink positioning signal configuration from a network device (for example, a core network device or a wireless access network device, mainly a core network device); and then the terminal transmits an uplink positioning signal, the TRP performs measurement and sends the measurement report to the core network device, and the core network device calculates the location of the terminal.

FIG. 2 is a flowchart of a positioning method based on a carrier phase shown according to an example embodiment. As shown in FIG. 2, the method may be applied to a first device, where the first device may be a UE or a TRP, and the method may include the following step.

In step S11, a positioning report is sent to a second device.

In the embodiments of the present disclosure, the first device may send a positioning report to the second device. The positioning report may include carrier phase information and a frequency domain resource identifier, where the carrier phase information includes at least one of a whole cycle part and a fractional part. The frequency domain resource identifier is used to indicate a frequency domain resource identifier corresponding to the carrier phase information.

In some embodiments, the positioning report includes carrier phase information obtained based on a positioning signal, and a frequency domain resource identifier. The frequency domain resource identifier may identify a corresponding frequency domain resource. It may be determined by using the frequency domain resource identifier that the carrier phase information in the positioning report is obtained based on the positioning signal on the frequency domain resource corresponding to the frequency domain resource identifier.

In some embodiments, the carrier phase information in the positioning report may be carrier phase information indicated by the frequency domain resource identifier and obtained based on the positioning signal on the frequency domain resource corresponding to the frequency domain resource identifier. That is, there is a correspondence between the carrier phase information and the frequency domain resource identifier in the positioning report.

In the positioning method based on a carrier phase provided by the embodiments of the present disclosure, the carrier phase information of different frequency domain resources is identified by using the frequency domain resource identifier in the positioning report, so that the whole cycle part of the carrier phase is accurately determined by using the carrier phase information on different frequency domain resources, thus improving the positioning accuracy for performing positioning based on a carrier phase.

In the positioning method based on a carrier phase provided by the embodiments of the present disclosure, the frequency domain resource identifier includes at least one of: a subcarrier identifier, a resource block (RB) identifier, a resource block group (RB group) identifier, a sub-band identifier, a bandwidth part (BWP) identifier, a component carrier (CC) identifier, or a frequency layer identifier.

Among them, in the embodiments of the present disclosure, the identifier may be, for example, an identity document (ID) or an index.

In the embodiments of the present disclosure, if the frequency domain resource identifier is the subcarrier identifier, it may be understood that the carrier phase information is obtained by performing measurement based on each subcarrier.

In the embodiments of the present disclosure, one RB may include 12 subcarriers.

In the embodiments of the present disclosure, one RB group may include N RBs, where N is a positive integer, and N may be preconfigured by the core network device or the wireless access network device.

In the embodiments of the present disclosure, one sub-band may include M RBs, where M is a positive integer, and M may be preconfigured by the core network device or the wireless access network device.

It is to be understood that the values of N and M are not necessarily associated with each other; that is, N and M may be the same or different. That is, one RB group may include one or more sub-bands, or one sub-band may include one or more RB groups, which is not limited in the present disclosure.

The positioning method based on a carrier phase provided in the embodiments of the present disclosure may be applicable to frequency resource of different sizes, so that the whole cycle part of the carrier phase may be accurately determined by using the carrier phase information on different frequency domain resources, thus improving the positioning accuracy for performing positioning based on a carrier phase.

In the positioning method based on a carrier phase provided in the embodiments of the present disclosure, the number of the frequency domain resource is one or more.

In the embodiments of the present disclosure, there may be one or more frequency domain resource identifiers in the positioning report. Correspondingly, the carrier phase information in the positioning report may correspond to one frequency domain resource, or may correspond to more than one frequency domain resources. Typically, the more than one frequency domain resource identifier corresponding to the carrier phase information are two frequency domain resource identifiers.

In the positioning method based on a carrier phase provided by the embodiments of the present disclosure, the carrier phase information may be obtained by performing measurement using one frequency domain resource or more than one frequency domain resource, so that the whole cycle part of the carrier phase is accurately determined, and the positioning accuracy for performing positioning based on a carrier phase is improved.

In the positioning method based on a carrier phase provided by the embodiments of the present disclosure, the carrier phase information may include at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In the embodiments of the present disclosure, for the carrier phase information in the positioning report, the carrier phase information may be obtained by performing measurement based on one positioning signal. In some embodiments, for example, the carrier phase measurement value obtained by performing measurement based on the positioning signal may be directly used as the carrier phase information in the positioning report.

In some embodiments, for example, as shown in FIG. 3, the transmitting device transmits the positioning signal 1 on the frequency domain 1, the frequency domain 2 and the frequency domain 3. Based on measurement of the positioning signal 1 on each frequency domain of at least one frequency domain, the receiving device may obtain a corresponding carrier phase measurement value, such as the carrier phase measurement value 1 on the frequency domain 1, the carrier phase measurement value 2 on the frequency domain 2, and the carrier phase measurement value 3 on the frequency domain 3. The corresponding carrier phase measurement value may be used as the carrier phase information. The positioning report includes at least one of: the carrier phase information of the frequency domain 1 and the frequency domain resource identifier of the frequency domain 1, the carrier phase information of frequency domain 2 and the frequency domain resource identifier of the frequency domain 2, or the carrier phase information of the frequency domain 3 and the frequency domain resource identifier of the frequency domain 3. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device.

In the embodiments of the present disclosure, for the carrier phase information in the positioning report, a carrier phase measurement value may be obtained by performing measurement based on one positioning signal, and then a difference between the carrier phase measurement value and the reference carrier phase value may be obtained. In some embodiments, for example, a carrier phase measurement value is obtained by the TRP performing measurement on an uplink positioning signal, a difference between the carrier phase measurement value and the reference carrier phase value is obtained by subtracting between the carrier phase measurement value and the reference carrier phase value, and the difference is used as the carrier phase information in the positioning report. The reference carrier phase value in the present disclosure may be specified in a protocol, or may be configured by an LMF, which is not limited in the present disclosure.

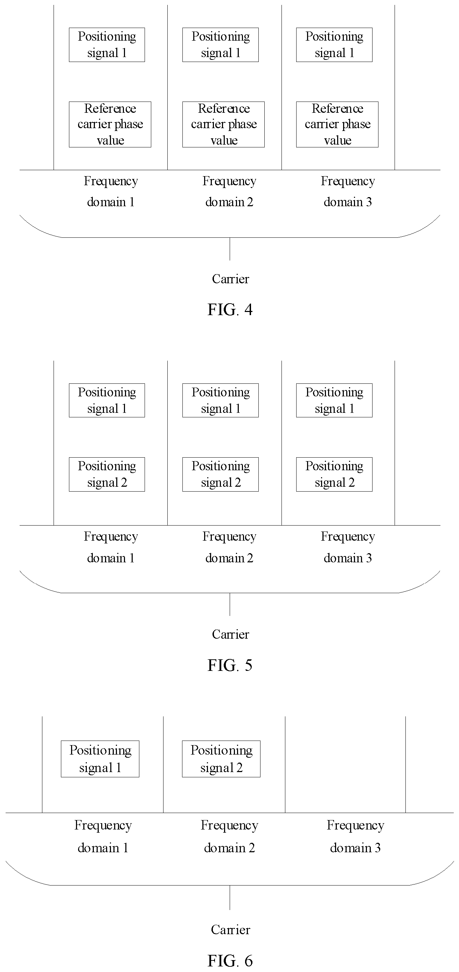

In some embodiments, for example, as shown in FIG. 4, the transmitting device transmits the positioning signal 1 on the frequency domain 1, the frequency domain 2 and the frequency domain 3. Based on measurement of the positioning signal 1 on each frequency domain of at least one frequency domain, the receiving device may obtain a corresponding carrier phase measurement value, such as the carrier phase measurement value 1 on the frequency domain 1, the carrier phase measurement value 2 on the frequency domain 2, and the carrier phase measurement value 3 on the frequency domain 3. A difference between the corresponding carrier phase measurement value and the reference carrier phase value may be obtained by subtracting between the corresponding carrier phase measurement value and the pre-configured reference carrier phase value, and the difference may be used as the carrier phase information corresponding to the corresponding frequency domain. The positioning report includes at least one of: the carrier phase information of the frequency domain 1 and the frequency domain resource identifier of the frequency domain 1, where the carrier phase information of the frequency domain 1 is obtained according to a difference between the carrier phase measurement value on the frequency domain 1 and the reference carrier phase value; the carrier phase information of the frequency domain 2 and the frequency domain resource identifier of the frequency domain 2, where the carrier phase information of the frequency domain 2 is obtained according to the difference between the carrier phase measurement value on the frequency domain 2 and the reference carrier phase value; or, the carrier phase information of the frequency domain 3 and the frequency domain resource identifier of the frequency domain 3, where the carrier phase information of the frequency domain 3 is obtained according to the difference between the carrier phase measurement value on the frequency domain 3 and the reference carrier phase value. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device.

In the embodiments of the present disclosure, for the carrier phase information in the positioning report, the carrier phase information may be obtained based on the difference between the carrier phase measurement values obtained by performing measurement based on more than one positioning signal. In some embodiments, the difference between the carrier phase measurement values obtained by performing measurement based on more than one positioning signal may be directly used as the carrier phase information in the positioning report. In some other examples, the carrier phase information may also be obtained according to the difference between the carrier phase measurement values obtained by performing measurement based on more than one positioning signal and according to a preset rule, which is not limited in the present disclosure.

In some embodiments, for example, the transmitting device transmits more than one positioning signal respectively on the frequency domain 1, the frequency domain 2, and the frequency domain 3. Based on measurement of the more than one positioning signal on each frequency domain of at least one frequency domain, the receiving device may obtain a carrier phase measurement value corresponding to each positioning signal. Alternatively, based on respective measurement of the more than one positioning signal on different frequency domains, the carrier phase measurement values respectively corresponding to the more than one positioning signal may be obtained. For example, based on measurement of two positioning signals on each frequency domain, the carrier phase measurement values respectively corresponding to the two positioning signals are obtained. Alternatively, based on measurement of two positioning signals on different frequency domains, the carrier phase measurement values respectively corresponding to the two positioning signals are obtained. A difference between the two carrier phase measurement values may be obtained by subtracting between the two carrier phase measurement values, and the difference may be used as the corresponding carrier phase information. Among them, the transmitting device is a terminal device, and the receiving device is a TRP; or, the transmitting device is a TRP, and the receiving device is a terminal device.

In an example, as shown in FIG. 5, the carrier phase measurement values obtained by performing measurement according to more than one positioning signal may correspond to the same frequency domain resource. Typically, the more than one positioning signal are two downlink positioning signals. For example, the carrier phase measurement value 1 corresponds to the positioning signal 1 on the frequency domain 1, and the carrier phase measurement value 2 corresponds to the positioning signal 2 on the frequency domain 1; the carrier phase measurement value 3 corresponds to the positioning signal 1 on the frequency domain 2, and the carrier phase measurement value 4 corresponds to the positioning signal 2 on the frequency domain 2; and the carrier phase measurement value 5 corresponds to the positioning signal 1 on the frequency domain 3, and the carrier phase measurement value 6 corresponds to the positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according the difference between the two carrier phase measurement values obtained according to the positioning signal 1 and the positioning signal 2 on the frequency domain 1, that is, obtained according the difference between the carrier phase measurement value 1 corresponding to the positioning signal 1 and the carrier phase measurement value 2 corresponding to the positioning signal 2; the carrier phase information of the frequency domain 2 and the frequency domain resource identifier of the frequency domain 2, where the carrier phase information of the frequency domain 2 is obtained according to the difference between the two carrier phase measurement values obtained according to the positioning signal 1 and the positioning signal 2 on the frequency domain 2, that is, obtained according to the difference between the carrier phase measurement value 3 corresponding to the positioning signal 1 and the carrier phase measurement value 4 corresponding to the positioning signal 2; or, the carrier phase information of the frequency domain 3 and the frequency domain resource identifier of the frequency domain 3, where the carrier phase information of the frequency domain 3 is obtained according to the difference between the two carrier phase measurement values obtained according to the positioning signal 1 and the positioning signal 2 on the frequency domain 3, that is, obtained according to the difference between the carrier phase measurement value 5 corresponding to the positioning signal 1 and the carrier phase measurement value 6 corresponding to the positioning signal 2.

In another example, as shown in FIG. 6, the carrier phase measurement values obtained by performing measurement according to the more than one positioning signal may correspond to different frequency domain resources. For example, the carrier phase measurement value 1 corresponds to the positioning signal 1 on the frequency domain 1, and the carrier phase measurement value 2 corresponds to the positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to a difference between the carrier phase measurement value 1 corresponding to the positioning signal 1 on the frequency domain 1 and the carrier phase measurement value 2 corresponding to the positioning signal 2 on the frequency domain 2. Therefore, it is convenient for the second device to perform positioning according to the carrier phase information and the frequency domain resource identifier of each frequency domain in the positioning report. Certainly, the positioning report may further include any other plurality of frequency domain resource identifiers and the corresponding carrier phase information, for example, any two frequency domain resource identifiers, which is not limited in the present disclosure.

In the embodiments of the present disclosure, for the carrier phase information in the positioning report, the carrier phase information may be obtained based on the difference between the carrier phase measurement values obtained by performing measurement on different frequency domain resources according to one positioning signal. In some embodiments, the difference between the carrier phase measurement values obtained by performing measurement on different frequency domain resources according to the positioning signal may be directly used as the carrier phase information in the positioning report. In some other examples, the carrier phase information may also be obtained according to the difference between the carrier phase measurement values obtained by performing measurement on different frequency domain resources according to the positioning signal, and according to a preset rule, which is not limited in the present disclosure.

In some embodiments, for example, as shown in FIG. 3, the transmitting device transmits the positioning signal 1 on the frequency domain 1, the frequency domain 2 and the frequency domain 3. Based on measurement of the positioning signal 1 on each frequency domain of at least two frequency domains, the receiving device may obtain a carrier phase measurement value corresponding to the positioning signal 1. For example, the positioning signal 1 may be measured on the frequency domain 1 and the frequency domain 2 to obtain carrier phase measurement values corresponding to the positioning signal 1 on the frequency domain 1 and the frequency domain 2, for example, the carrier phase measurement value 1 on the frequency domain 1 and the carrier phase measurement value 2 on the frequency domain 2. A difference between the two carrier phase measurement values may be obtained by subtracting between the two carrier phase measurement values, and the difference may be used as the carrier phase information. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 of the positioning signal 1 on the frequency domain 1 and the carrier phase measurement value 2 of the positioning signal 1 on the frequency domain 2. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device. It may be understood that the positioning report may further include any other plurality of frequency domain resource identifiers and corresponding carrier phase information, for example, any two frequency domain resource identifiers, which is not limited in the present disclosure.

In the positioning method based on a carrier phase provided by the embodiments of the present disclosure, the carrier phase information may be obtained by performing measurement on one or more different frequency domain resources using one positioning signal, or may be obtained by using one positioning signal and a reference carrier phase value, or may be obtained by performing measurement using more than one positioning signal. The positioning method may be applied to various different positioning scenarios, and the application range of the positioning measurement solution may be expanded.

In the positioning method based on a carrier phase provided by the embodiments of the present disclosure, the difference between the carrier phase measurement values obtained by performing measurement based on more than one positioning signal may include at least one of: a difference between carrier phase measurement values obtained by performing measurement based on more than one downlink positioning signal; a difference between carrier phase measurement values obtained by performing measurement based on more than one uplink positioning signal; or, a difference between carrier phase measurement values obtained by performing measurement based on one downlink positioning signal and one uplink positioning signal.

In the embodiments of the present disclosure, the difference between the carrier phase measurement values obtained by performing measurement using more than one positioning signal may be a difference between carrier phase measurement values obtained by performing measurement using more than one downlink positioning signal. In some embodiments, for example, the more than one downlink positioning signal are two downlink positioning signals.

In some embodiments, for example, the transmitting device respectively transmits more than one positioning signal on the frequency domain 1, the frequency domain 2, and the frequency domain 3. Based on measurement of the more than one downlink positioning signal on each frequency domain of at least one frequency domain, the receiving device may obtain a carrier phase measurement value corresponding to each downlink positioning signal. For example, based on respective measurement of two downlink positioning signals on each frequency domain of at least one frequency domain, carrier phase measurement values respectively corresponding to the two downlink positioning signals are to obtained. Alternatively, based on respective measurement of two downlink positioning signals on different frequency domains, carrier phase measurement values respectively corresponding to the two downlink positioning signals are to obtained. A difference between the carrier phase measurement values corresponding to the two downlink positioning signals may be obtained by subtracting between the carrier phase measurement values respectively corresponding to the two downlink positioning signals, and the difference may be used as the corresponding carrier phase information. Among them, the transmitting device is a terminal device, and the receiving device is a TRP; or, the transmitting device is a TRP, and the receiving device is a terminal device.

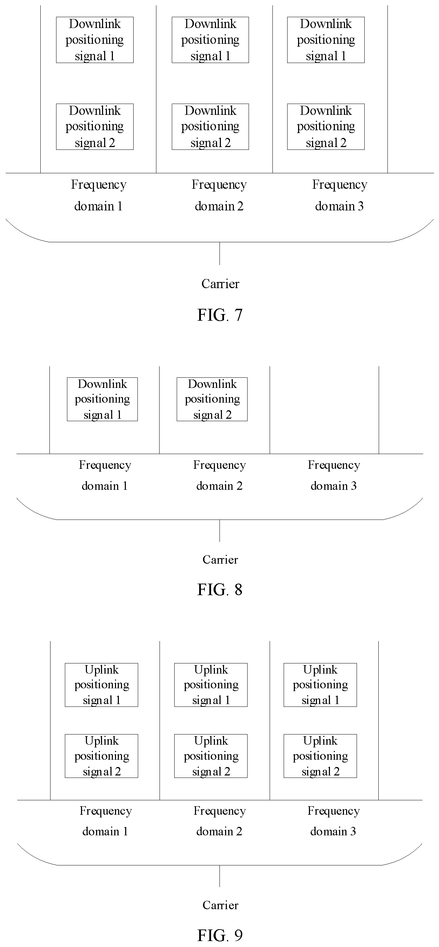

In an example, as shown in FIG. 7, the carrier phase measurement values obtained by performing measurement using more than one downlink positioning signal may correspond to the same frequency domain resource. Typically, the more than one downlink positioning signal are two downlink positioning signals. For example, the carrier phase measurement value 1 corresponds to the downlink positioning signal 1 on the frequency domain 1, the carrier phase measurement value 2 corresponds to the downlink positioning signal 2 on the frequency domain 1, the carrier phase measurement value 3 corresponds to the downlink positioning signal 1 on the frequency domain 2, the carrier phase measurement value 4 corresponds to the downlink positioning signal 2 on the frequency domain 2, the carrier phase measurement value 5 corresponds to the downlink positioning signal 1 on the frequency domain 3, and the carrier phase measurement value 6 corresponds to the downlink positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the downlink positioning signal 1 and the downlink positioning signal 2 on the frequency domain 1, that is, obtained according to the difference between the carrier phase measurement value 1 corresponding to the downlink positioning signal 1 and the carrier phase measurement value 2 corresponding to the downlink positioning signal 2; the carrier phase information of the frequency domain 2 and the frequency domain resource identifier of the frequency domain 2, where the carrier phase information of the frequency domain 2 is obtained according to the difference between the carrier phase measurement values respectively corresponding to the downlink positioning signal 1 and the downlink positioning signal 2 on the frequency domain 2, that is, obtained according to the difference between the carrier phase measurement value 3 corresponding to the downlink positioning signal 1 and the carrier phase measurement value 4 corresponding to the downlink positioning signal 2; or, the carrier phase information of the frequency domain 3 and the frequency domain resource identifier of the frequency domain 3, where the carrier phase information of the frequency domain 3 is obtained according to the difference between the carrier phase measurement values respectively corresponding to the downlink positioning signal 1 and the downlink positioning signal 2 on the frequency domain 3, that is, obtained according to the difference between the carrier phase measurement value 5 corresponding to the downlink positioning signal 1 and the carrier phase measurement value 6 corresponding to the downlink positioning signal 2.

In another example, as shown in FIG. 8, the carrier phase measurement values obtained by performing measurement using more than one downlink positioning signal may correspond to different frequency domain resources. Typically, the more than one downlink positioning signal are two downlink positioning signals. For example, the carrier phase measurement value 1 corresponds to the downlink positioning signal 1 on the frequency domain 1, and the carrier phase measurement value 2 corresponds to the downlink positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the downlink positioning signal 1 on the frequency domain 1 and the carrier phase measurement value 2 corresponding to the downlink positioning signal 2 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, the more than one downlink positioning signal may also correspond to different frequency domain resources. Correspondingly, the positioning report should simultaneously include the frequency domain resource identifiers of more than one different frequency domain resources corresponding to the more than one downlink positioning signal.

In the embodiments of the present disclosure, the difference between the carrier phase measurement values obtained by performing measurement using more than one positioning signal may be a difference between carrier phase measurement values obtained by performing measurement using more than one uplink positioning signal. In some embodiments, for example, the more than one uplink positioning signal are two uplink positioning signals.

In some embodiments, for example, the transmitting device respectively transmits more than one positioning signal on the frequency domain 1, the frequency domain 2, and the frequency domain 3. Based on measurement of more than one uplink positioning signal based on each frequency domain of at least one frequency domain, the receiving device may obtain a carrier phase measurement value corresponding to each uplink positioning signal. For example, based on respective measurement of two uplink positioning signals on each frequency domain of at least one frequency domain, carrier phase measurement values respectively corresponding to the two uplink positioning signals are obtained. Alternatively, based on respective measurement of two uplink positioning signals on different frequency domains, carrier phase measurement values respectively corresponding to the two uplink positioning signals are obtained. A difference between the carrier phase measurement values corresponding to the two uplink positioning signals may be obtained by subtracting between the carrier phase measurement values respectively corresponding to the two uplink positioning signals, and the difference may be used as the corresponding carrier phase information. Among them, the transmitting device is a terminal device, and the receiving device is a TRP; or, the transmitting device is a TRP, and the receiving device is a terminal device.

In an example, as shown in FIG. 9, the carrier phase measurement values obtained by performing measurement using more than one uplink positioning signal may correspond to the same frequency domain resource. Typically, the more than one uplink positioning signal are two uplink positioning signals. For example, the carrier phase measurement value 1 corresponds to the uplink positioning signal 1 on the frequency domain 1, the carrier phase measurement value 2 corresponds to the uplink positioning signal 2 on the frequency domain 1, the carrier phase measurement value 3 corresponds to the uplink positioning signal 1 on the frequency domain 2, the carrier phase measurement value 4 corresponds to the uplink positioning signal 2 on the frequency domain 2, the carrier phase measurement value 5 corresponds to the uplink positioning signal 1 on the frequency domain 3, and the carrier phase measurement value 6 corresponds to the uplink positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the uplink positioning signal 1 and the uplink positioning signal 2 on the frequency domain 1, that is, obtained according to the difference between the carrier phase measurement value 1 corresponding to the uplink positioning signal 1 and the carrier phase measurement value 2 corresponding to the uplink positioning signal 2; the carrier phase information of the frequency domain 2 and the frequency domain resource identifier of the frequency domain 2, where the carrier phase information of the frequency domain 2 is obtained according to the difference between the carrier phase measurement values respectively corresponding to the uplink positioning signal 1 and the uplink positioning signal 2 on the frequency domain 2, that is, obtained according to the difference between the carrier phase measurement value 3 corresponding to the uplink positioning signal 1 and the carrier phase measurement value 4 corresponding to the uplink positioning signal 2; or, the carrier phase information of the frequency domain 3 and the frequency domain resource identifier of the frequency domain 3, where the carrier phase information of the frequency domain 3 is obtained according to the difference between the carrier phase measurement values respectively corresponding to the uplink positioning signal 1 and the uplink positioning signal 2 on the frequency domain 3, that is, obtained according to the difference between the carrier phase measurement value 5 corresponding to the uplink positioning signal 1 and the carrier phase measurement value 6 corresponding to the uplink positioning signal 2.

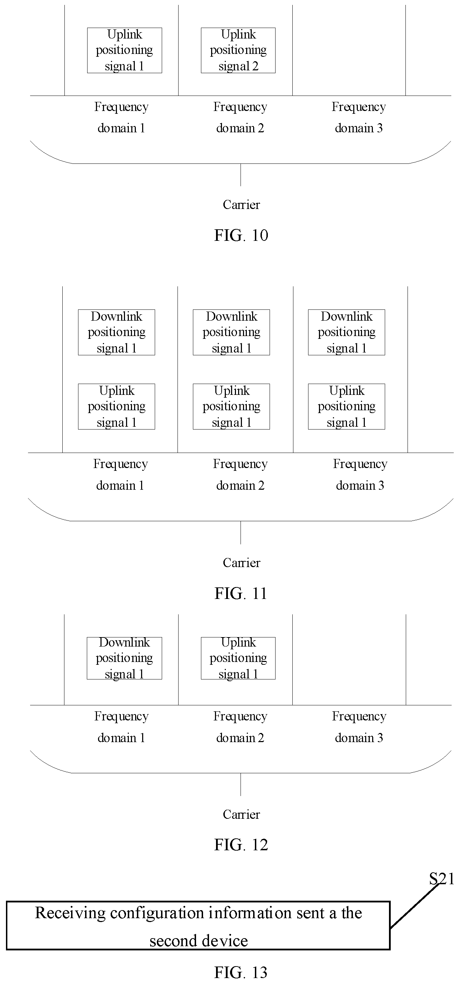

In another example, as shown in FIG. 10, the carrier phase measurement values obtained by performing measurement using more than one uplink positioning signal may correspond to different frequency domain resources. Typically, the more than one uplink positioning signal are two uplink positioning signals. For example, the carrier phase measurement value 1 corresponds to the uplink positioning signal 1 on the frequency domain 1, and the carrier phase measurement value 2 corresponds to the uplink positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the uplink positioning signal 1 on the frequency domain 1 and the carrier phase measurement value 2 corresponding to the uplink positioning signal 2 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, more than one uplink positioning signal may also correspond to different frequency domain resources. Correspondingly, the positioning report should simultaneously include the frequency domain resource identifiers of more than one different frequency domain resources corresponding to the more than one uplink positioning signal.

In the embodiments of the present disclosure, the difference between the carrier phase measurement values obtained by performing measurement using more than one positioning signal may be a difference between the carrier phase measurement values obtained by performing measurement using one downlink positioning signal and one uplink positioning signal.

In some embodiments, for example, the transmitting device respectively transmits more than one positioning signal on the frequency domain 1, the frequency domain 2, and the frequency domain 3. Based on measurement of one uplink positioning signal and one downlink positioning signal on each frequency domain of at least one frequency domain, the receiving device may obtain carrier phase measurement values corresponding to one uplink positioning signal and one downlink positioning signal. Alternatively, based on respective measurement of one uplink positioning signal and one downlink positioning signal on different frequency domains, carrier phase measurement values corresponding to one uplink positioning signal and one downlink positioning signal are obtained. For example, based on measurement of one uplink positioning signal and one downlink positioning signal on each frequency domain of at least one frequency domain, carrier phase measurement values respectively corresponding to one uplink positioning signal and one downlink positioning signal are obtained. Alternatively, based on respective measurement of one uplink positioning signal and one downlink positioning signal on different frequency domains, carrier phase measurement values respectively corresponding to one uplink positioning signal and one downlink positioning signal are obtained. A difference between the carrier phase measurement values corresponding to one uplink positioning signal and one downlink positioning signal may be obtained by subtracting between the carrier phase measurement values respectively corresponding to one uplink positioning signal and one downlink positioning signal, and the difference may be used as the carrier phase information corresponding to the respective frequency domain. Among them, the transmitting device is a terminal device, and the receiving device is a TRP; or, the transmitting device is a TRP, and the receiving device is a terminal device.

In an example, as shown in FIG. 11, the carrier phase measurement values corresponding to one uplink positioning signal and one downlink positioning signal may correspond to the same frequency domain resource. For example, the carrier phase measurement value 1 corresponds to the downlink positioning signal 1 on the frequency domain 1, the carrier phase measurement value 2 corresponds to the uplink positioning signal 1 on the frequency domain 1, the carrier phase measurement value 3 corresponds to the downlink positioning signal 1 on the frequency domain 2, the carrier phase measurement value 4 corresponds to the uplink positioning signal 1 on the frequency domain 2, the carrier phase measurement value 5 corresponds to the downlink positioning signal 1 on the frequency domain 3, and the carrier phase measurement value 6 corresponds to the uplink positioning signal 1 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the uplink positioning signal 1 and the downlink positioning signal 1 on the frequency domain 1, that is, obtained according to the difference between the carrier phase measurement value 1 corresponding to the downlink positioning signal 1 and the carrier phase measurement value 2 corresponding to the uplink positioning signal 1; the carrier phase information of the frequency domain 2 and the frequency domain resource identifier of the frequency domain 2, where the carrier phase information of the frequency domain 2 is obtained according to the difference between the carrier phase measurement values respectively corresponding to the uplink positioning signal 1 and the downlink positioning signal 1 on the frequency domain 2, that is, obtained according to the difference between the carrier phase measurement value 3 corresponding to the downlink positioning signal 1 and the carrier phase measurement value 4 corresponding to the uplink positioning signal 1; or, the carrier phase information of the frequency domain 3 and the frequency domain resource identifier of the frequency domain 3, where the carrier phase information of the frequency domain 3 is obtained according to the difference between the carrier phase measurement values corresponding to the uplink positioning signal 1 and the downlink positioning signal 1 on the frequency domain 3, that is, obtained according to the difference between the carrier phase measurement value 5 corresponding to the downlink positioning signal 1 and the carrier phase measurement value 6 corresponding to the uplink positioning signal 1.

In another example, as shown in FIG. 12, the carrier phase measurement values corresponding to one uplink positioning signal and one downlink positioning signal may correspond to different frequency domain resources. For example, the carrier phase measurement value 1 corresponds to the downlink positioning signal 1 on the frequency domain 1, and the carrier phase measurement value 2 corresponds to the uplink positioning signal 1 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the downlink positioning signal 1 on the frequency domain 1 and the carrier phase measurement value 2 corresponding to the uplink positioning signal 1 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, one uplink positioning signal and one downlink positioning signal may also correspond to different frequency domain resources. Correspondingly, the positioning report should simultaneously include frequency domain resource identifiers of different frequency domain resources corresponding to one uplink positioning signal and one downlink positioning signal.

In the positioning method based on a carrier phase provided by the embodiments of the present disclosure, the difference between the carrier phase measurement values may be obtained by performing measurement using an uplink positioning signal and/or a downlink positioning signal. The positioning method may be applied to uplink positioning measurement and/or downlink positioning measurement, and may be applicable to various different positioning scenarios, so that the application range of the positioning measurement solution is wider.

In the positioning method based on a carrier phase provided by embodiments of the present disclosure, the carrier phase information includes a difference between carrier phase measurement values obtained by performing measurement based on more than one positioning signal. For the difference between the carrier phase measurement values obtained by performing measurement based on more than one positioning signal, it may include that: the difference between the carrier phase measurement values obtained by performing measurement based on the more than one positioning signal corresponds to one frequency domain resource identifier; or, the difference between the carrier phase measurement values obtained by performing measurement based on the more than one positioning signal corresponds to more than one frequency domain resource identifier.

In the embodiments of the present disclosure, the difference between the carrier phase measurement values obtained by performing measurement using more than one positioning signal may correspond to one frequency domain resource identifier. For example, based on more than one positioning signal measured on the same frequency domain resource, the difference between the corresponding carrier phase measurement values is obtained.

In some embodiments, for example, the transmitting device respectively transmits more than one positioning signal on the frequency domain 1, the frequency domain 2, and the frequency domain 3. Based on more than one positioning signal measured on each frequency domain of at least one frequency domain, the receiving device may obtain the carrier phase measurement values corresponding to the more than one positioning signal. For example, based on more than one positioning signal measured on each frequency domain, carrier phase measurement values respectively corresponding to the more than one positioning signal are obtained. Typically, more than one positioning signal are two positioning signals. A difference between the carrier phase measurement values corresponding to the two positioning signals may be obtained by subtracting between the carrier phase measurement values corresponding to the two positioning signals, and the difference may be used as the carrier phase information corresponding to the respective frequency domain. Among them, the transmitting device is a terminal device, and the receiving device is a TRP; or, the transmitting device is a TRP, and the receiving device is a terminal device.

In an example, for example, as shown in FIG. 5, FIG. 7, FIG. 9, or FIG. 11, it is assumed that the carrier phase measurement values corresponding to more than one positioning signal correspond to the same frequency domain resource, and typically, the more than one positioning signal are two positioning signals. For example, the carrier phase measurement value 1 and the carrier phase measurement value 2 respectively correspond to two positioning signals on the frequency domain 1; the carrier phase measurement value 3 and the carrier phase measurement value 4 respectively correspond to two positioning signals 1 on the frequency domain 2; and, the carrier phase measurement value 5 and the carrier phase measurement value 6 respectively correspond to two positioning signals 1 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the two positioning signals on the frequency domain 1, that is, obtained according to the difference between the carrier phase measurement value 1 and the carrier phase measurement value 2; the carrier phase information of the frequency domain 2 and the frequency domain resource identifier of the frequency domain 2, where the carrier phase information of the frequency domain 2 is obtained according to the difference between the carrier phase measurement values respectively corresponding to the two positioning signals on the frequency domain 2, that is, obtained according to the difference between the carrier phase measurement value 3 and the carrier phase measurement value 4; or, the carrier phase information of the frequency domain 3 and the frequency domain resource identifier of the frequency domain 3, where the carrier phase information of the frequency domain 3 is obtained according to the difference between the carrier phase measurement values respectively corresponding to the two positioning signals on the frequency domain 3, that is, obtained according to the difference between the carrier phase measurement value 5 and the carrier phase measurement value 6. Therefore, it is convenient for the second device to perform positioning according to the carrier phase information and the frequency domain resource identifier of each frequency domain in the positioning report.

In the embodiments of the present disclosure, the difference between the carrier phase measurement values obtained by performing measurement using more than one positioning signal may correspond to more than one frequency domain resource identifier. For example, based on more than one positioning signal measured on different plurality of frequency domain resources, a difference between corresponding carrier phase measurement values may be obtained. In some embodiments, if the more than one positioning signal are two positioning signals, the two positioning signals may be measured on different frequency domain resources respectively. For example, the carrier phase measurement values of the corresponding positioning signals are obtained based on respective measurement on two different frequency domain resources, and the difference between the carrier phase measurement values is obtained based on the carrier phase measurement values of the corresponding positioning signals on different frequency domain resources.

In some embodiments, for example, the transmitting device respectively transmits more than one positioning signal on the frequency domain 1, the frequency domain 2, and the frequency domain 3. Based on more than one positioning signal measured on each frequency domain of at least one frequency domain, the receiving device may obtain the carrier phase measurement values respectively corresponding to the more than one positioning signal. For example, based on the positioning signal respectively measured on each frequency domain of at least one frequency domain, the carrier phase measurement values respectively corresponding to the more than one positioning signal are obtained. Typically, the more than one positioning signal are two positioning signals. A difference between the carrier phase measurement values corresponding to the two positioning signals may be obtained by subtracting between the carrier phase measurement values corresponding to the two positioning signals, and the difference may be used as the corresponding carrier phase information. Among them, the transmitting device is a terminal device, and the receiving device is a TRP; or, the transmitting device is a TRP, and the receiving device is a terminal device.

In an example, for example, as shown in FIG. 6, FIG. 8, FIG. 10, or FIG. 12, it is assumed that the carrier phase measurement values corresponding to more than one positioning signal correspond to different plurality of frequency domain resources, and typically, the more than one positioning signal are two positioning signals. For example, the carrier phase measurement values corresponding to the two positioning signals correspond to two different frequency domain resources, such as the frequency domain 1 and the frequency domain 2. For example, the carrier phase measurement value 1 corresponds to the positioning signal on the frequency domain 1, and the carrier phase measurement value 2 corresponds to the positioning signal on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the positioning signal on the frequency domain 1 and the carrier phase measurement value 2 corresponding to the positioning signal on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

In an example, the difference between the carrier phase measurement values may correspond to the same frequency domain resource or different frequency domain resources. That is, the difference between the carrier phase measurement values corresponds to one frequency domain resource identifier or more than one frequency domain resource identifier.

In the positioning method based on a carrier phase provided by the embodiments of the present disclosure, the carrier phase information may be obtained by performing measurement using different frequency domain resources based on one frequency domain resource identifier or more than one frequency domain resource identifier, so as to accurately determine the whole cycle part of the carrier phase, thus improving the positioning accuracy for performing positioning based on the carrier phase.

In the positioning method based on a carrier phase provided by embodiments of the present disclosure, more than one positioning signal include a reference positioning signal.

In the embodiments of the present disclosure, one of the more than one positioning signal may be a reference positioning signal.

According to the positioning method based on a carrier phase provided in the embodiments of the present disclosure, the more than one positioning signal includes a reference positioning signal, so that the difference between the carrier phase measurement values may be more accurately obtained based on more than one positioning signal. For example, the carrier phase measurement value corresponding to the reference positioning signal is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In the positioning method based on a carrier phase provided by the embodiments of the present disclosure, more than one positioning signal corresponds to a same TRP, or corresponds to different TRPs.

In the embodiments of the present disclosure, more than one positioning signal may correspond to the same TRP, or more than one positioning signal may correspond to different TRPs. For example, assuming that more than one positioning signal are two positioning signals, the two positioning signals may correspond to the same TRP. Alternatively, the two positioning signals may correspond to two different TRPs, that is, one positioning signal corresponds to one TRP, and TRPs corresponding to the two positioning signals are different from each other.

According to the positioning method based on a carrier phase provided in the embodiments of the present disclosure, the more than one positioning signal may correspond to the same TRP or different TRPs, so that the positioning method is applicable to various different positioning scenarios, and the application range of the positioning measurement solution is wider.

In the positioning method based on a carrier phase provided by embodiments of the present disclosure, the more than one positioning signal corresponds to different TRPs, and the different TRPs include a reference TRP.

In the embodiments of the present disclosure, when more than one positioning signal corresponds to different TRPs, one TRP in the different TRPs may be a reference TRP.

In the positioning method based on a carrier phase provided by embodiments of the present disclosure, different TRPs corresponding to the more than one positioning signal may include a reference TRP, so that the difference between the carrier phase measurement values may be more accurately obtained based on more than one positioning signal. For example, the carrier phase measurement value of the positioning signal from the reference TRP is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In the positioning method based on a carrier phase provided by embodiments of the present disclosure, the carrier phase information includes a difference between the carrier phase measurement values obtained by performing measurement on different frequency domain resources based on one positioning signal, and the difference between the carrier phase measurement values obtained by performing measurement on different frequency domain resources based on one positioning signal corresponds to more than one frequency domain resource identifier.

In the embodiments of the present disclosure, the carrier phase information may be obtained according to a difference between carrier phase measurement values obtained by performing measurement on different frequency domain resources based on one positioning signal, where the difference between the carrier phase measurement values corresponds to more than one frequency domain resource identifier. It may be understood that more than one frequency domain resource identifier corresponding to the difference between the carrier phase measurement values may correspond to different frequency domain resources on which the carrier phase measurement values are obtained.

For example, if the difference between the carrier phase measurement values is obtained by performing measurement on two frequency domain resources by using one positioning signal, the more than one frequency domain resource identifier corresponding to the difference may include the frequency domain resource identifiers corresponding to the two frequency domain resources on which the carrier phase measurement values are obtained.

In some embodiments, for example, the transmitting device transmits the positioning signal 1 on the frequency domain 1, the frequency domain 2 and the frequency domain 3. Based on the positioning signal 1 measured on each frequency domain of at least one frequency domain, the receiving device may obtain the carrier phase measurement values corresponding to the positioning signal 1 on different frequency domains. For example, based on one positioning signal 1 measured on each frequency domain of at least one frequency domain, the carrier phase measurement values corresponding to the positioning signal 1 on different frequency domains may be obtained, such as the carrier phase measurement value 1 on the frequency domain 1, the carrier phase measurement value 2 on the frequency domain 2, and the carrier phase measurement value 3 on the frequency domain 3. A difference between the carrier phase measurement values corresponding to the positioning signal 1 on different frequency domains may be obtained by subtracting between the carrier phase measurement values corresponding to the positioning signal 1 on different frequency domains, and the difference may be used as the corresponding carrier phase information. Among them, the transmitting device is a terminal device, and the receiving device is a TRP; or, the transmitting device is a TRP, and the receiving device is a terminal device.

In an example, for example, as shown in FIG. 3, the carrier phase measurement value 1 and the carrier phase measurement value 2 corresponding to the positioning signal 1 correspond to two different frequency domain resources, such as the frequency domain 1 and the frequency domain 2. The positioning report includes: the carrier phase information, the frequency domain resource identifier of the frequency domain 1, and the frequency domain resource identifier of the frequency domain 2, where the carrier phase information is obtained according to difference between the carrier phase measurement value 1 corresponding to the positioning signal 1 on the frequency domain 1 and the carrier phase measurement value 2 corresponding to the positioning signal 1 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

According to the positioning method based on a carrier phase provided by the embodiment of the present disclosure, the carrier phase information may be obtained by performing measurement on different frequency domain resources using one positioning signal based on different frequency domain resource identifiers, thus the whole cycle part of the carrier phase may be accurately determined, and the positioning accuracy for performing positioning based on the carrier phase may be improved.

In the positioning method based on a carrier phase provided by embodiments of the present disclosure, FIG. 13 is another flowchart of a positioning method based on a carrier phase shown according to an example embodiment. As shown in FIG. 13, the method further includes the following step.

In step S21, the configuration information sent by the second device is received.

In the embodiments of the present disclosure, the first device may receive configuration information sent by the second device, where the configuration information is used to indicate a configuration parameter of the positioning signal.

In the embodiments of the present disclosure, after receiving the configuration information sent by the second device, the first device may send the positioning report to the second device.

In the positioning method based on a carrier phase provided by the embodiments of the present disclosure, the configuration parameter for indicating the positioning signal may be received, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In the positioning method based on a carrier phase provided by the embodiments of the present disclosure, the configuration information may include at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signal, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a starting physical resource block (PRB) position of the positioning signal, a transmission power for the positioning signal, or a pathloss reference signal of the positioning signal.

In the positioning method based on a carrier phase provided by the embodiments of the present disclosure, a plurality of configuration parameters of the positioning signal are provided, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In the positioning method based on a carrier phase provided by the embodiments of the present disclosure, the positioning report may further include at least one of: carrier phase error group information, measurement result information, a probability that a path corresponding to the carrier phase information is a line-of-sight (LoS) path, or corresponding Doppler parameter information.

In the embodiments of the present disclosure, the carrier phase error group information may include an ID (or index) of a carrier phase error group and/or an error value of the carrier phase error group. Among them, the carrier phase errors in the carrier phase error group are the same. It may be understood that, in some cases, different carrier phase error groups may be divided based on more than one different carrier phase errors according to a preset division rule, and the error value of the carrier phase error group may be obtained based on any carrier phase error in the group. In another case, more than one carrier phase with the same error value may also be divided into the same carrier phase error group according to the determined carrier phase error, which is not limited in the present disclosure.

In the embodiments of the present disclosure, the positioning report may include carrier phase information and a frequency domain resource identifier, and the positioning report may further include at least one of: carrier phase error group information, measurement result information, a probability that a path corresponding to the carrier phase information is a LOS path, or corresponding Doppler parameter information.

In the positioning method based on a carrier phase provided by the embodiments of the present disclosure, the positioning report may further include a plurality of different pieces of information. In this way, the network device, for example, the core network device, may accurately determine the whole cycle part of the carrier phase based on the positioning report, thus improving the positioning accuracy for performing positioning based on the carrier phase.

In the positioning method based on a carrier phase provided by embodiments of the present disclosure, the measurement result information may include at least one of: a reference signal receiving power (RSRP), an angle of arrival (AoA), an angle of departure (AoD), a time of arrival (ToA), a time difference of arrival (TDoA), a downlink (DL) reference signal time difference (RSTD), an uplink relative time of arrival (UL RToA), a receiving (Rx) transmitting (Tx) time difference of the first device or the second device, a round trip time (RTT), a Tx time error group (TEG) of the first device or the second device, a Rx time error group (REG) of the first device or the second device, or, a Tx Rx time error group (TREG) of the first device or the second device.

In some embodiments, the uplink relative time of arrival may be denoted as T_{UL-RToA}.

In the embodiments of the present disclosure, the positioning report may include carrier phase information and a frequency domain resource identifier. The positioning report may further include at least one of: carrier phase error group information, measurement result information, a probability that a path corresponding to the carrier phase information is a LOS path, or corresponding Doppler parameter information. Among them, the measurement result information may include at least one of: an RSRP, an AoA, an AoD, a ToA, a TDoA, a DL RSTD, a UL RToA, a Rx Tx time difference of the first device or the second device, an RTT, a TEG of the first device or the second device, a REG of the first device or the second device, or a TREG of the first device or the second device.

In the positioning method based on a carrier phase provided by the embodiments of the present disclosure, the measurement result information may further include a plurality of different pieces of information. In this way, the network device, for example, the core network device, may accurately determine the whole cycle part of the carrier phase based on the positioning report, thus improving the positioning accuracy for performing positioning based on the carrier phase.

In the positioning method based on a carrier phase provided by the embodiments of the present disclosure, the positioning signal may include a positioning reference signal (PRS) or a sounding reference signal (SRS).

In the embodiments of the present disclosure, the RPS may correspond to the downlink positioning signal mentioned above, and the SRS may correspond to the uplink positioning signal mentioned above.

Of course, in some embodiments, the positioning signal may be any other equivalent reference signal for positioning, which is not limited in the present disclosure.

In the embodiments of the present disclosure, the positioning signal may be a PRS, an SRS, and/or any other equivalent reference signal for positioning.

In the positioning method based on a carrier phase provided by the embodiments of the present disclosure, more accurate carrier phase information may be obtained by performing measurement on the same frequency domain resource or different frequency domain resources based on the PRS and/or the SRS, so that the whole cycle part of the carrier phase is accurately determined, and the positioning accuracy for performing positioning based on the carrier phase is improved.

In the positioning method based on a carrier phase provided by the embodiments of the present disclosure, the first device is a terminal, and the second device is a core network device; alternatively, the first device is a TRP, and the second device is a core network device.

In the positioning method based on a carrier phase provided by the embodiments of the present disclosure, the first device may be UE or a TRP, and the second device may be a core network device, so as to adapt to an uplink positioning solution or a downlink positioning solution. The positioning method may be applicable to various different positioning scenarios, so that the application range of the positioning measurement solution is wider.

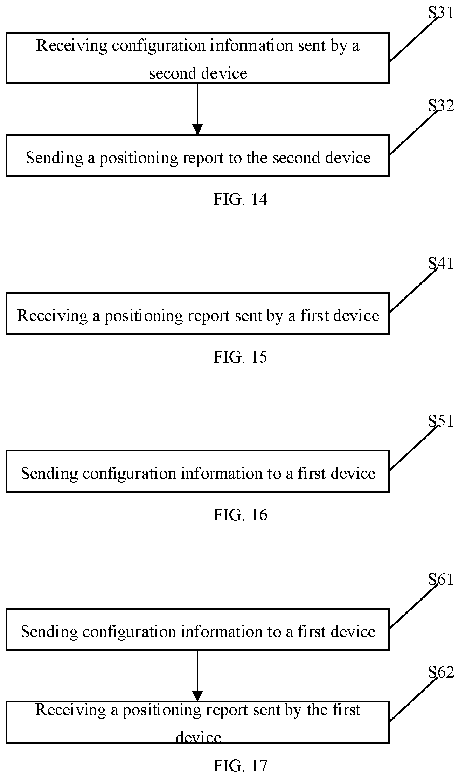

FIG. 14 is another flowchart of a positioning method based on a carrier phase shown according to an example embodiment. As shown in FIG. 14, the method may be applied to a first device, and the method may include the following steps.

In step S31, configuration information sent by the second device is received.

In the embodiments of the present disclosure, the first device may receive the configuration information sent by the second device, where the configuration information is used to indicate a configuration parameter of the positioning signal.

In step S32, a positioning report is sent to the second device.

In the embodiments of the present disclosure, the first device may send a positioning report to the second device. The positioning report may include carrier phase information and a frequency domain resource identifier, where the carrier phase information includes at least one of a whole cycle part and a fractional part, and the frequency domain resource identifier is used to indicate a frequency domain resource identifier corresponding to the carrier phase information.

It may be understood that the positioning method based on a carrier phase applied to the first device provided by the embodiments of the present disclosure in FIG. 14 is similar to the positioning method based on a carrier phase in FIG. 2 and FIG. 13, and the similar parts are not described here again.

FIG. 15 is another flowchart of a positioning method based on a carrier phase shown according to an example embodiment. As shown in FIG. 15, the method may be applied to a second device, where the second device may be a core network device or a wireless access network device. For example, the second device is a core network device, and the method may include the following step.

In step S41, a positioning report sent by a first device is received.

In the embodiments of the present disclosure, the second device may receive a positioning report sent by the first device. The positioning report may include carrier phase information and a frequency domain resource identifier, where the carrier phase information includes at least one of a whole cycle part and a fractional part, and the frequency domain resource identifier is used to indicate a frequency domain resource identifier corresponding to the carrier phase information.

In some embodiments, the positioning report includes carrier phase information obtained based on the positioning signal and a frequency domain resource identifier. The frequency domain resource identifier may identify a corresponding frequency domain resource. It may be determined by using the frequency domain resource identifier that the carrier phase information in the positioning report is obtained based on the positioning signal on the frequency domain resource corresponding to the frequency domain resource identifier. In some embodiments, the carrier phase information in the positioning report may be carrier phase information indicated by the frequency domain resource identifier and obtained based on the positioning signal on the frequency domain resource corresponding to the frequency domain resource identifier. That is, there is a correspondence between the carrier phase information and the frequency domain resource identifier in the positioning report.

In the positioning method based on a carrier phase provided by the embodiments of the present disclosure, the carrier phase information of different frequency domain resources is identified by using the frequency domain resource identifier in the positioning report, so that the whole cycle part of the carrier phase is accurately determined by using the carrier phase information on different frequency domain resources, thus improving the positioning accuracy for performing positioning based on the carrier phase.

In the positioning method based on a carrier phase provided by the embodiments of the present disclosure, the frequency domain resource identifier includes at least one of: a subcarrier identifier, an RB identifier, an RB group identifier, a sub-band identifier, a BWP identifier, a CC identifier, or a frequency layer identifier.

Among them, in the embodiments of the present disclosure, the identifier may be, for example, an ID or an index.

In the embodiments of the present disclosure, if the frequency domain resource identifier is the subcarrier identifier, it may be understood that the carrier phase information is obtained by performing measurement based on each subcarrier.

In the embodiments of the present disclosure, one RB may include 12 subcarriers.

In the embodiments of the present disclosure, one RB group may include N RBs, where N is a positive integer, and N may be preconfigured by the core network device or the wireless access network device.

In the embodiments of the present disclosure, one sub-band may include M RBs, where M is a positive integer, and M may be preconfigured by the core network device or the wireless access network device.

It is to be understood that the values of N and M are not necessarily associated with each other; that is, N and M may be the same or different. That is, one RB group may include one or more sub-bands, or one sub-band may include one or more RB groups, which is not limited in the present disclosure.

The positioning method based on a carrier phase provided in the embodiments of the present disclosure may be applicable to frequency resource of different sizes, so that the whole cycle part of the carrier phase may be accurately determined by using the carrier phase information on different frequency domain resources, thus improving the positioning accuracy for performing positioning based on a carrier phase.

In the positioning method based on a carrier phase provided in the embodiments of the present disclosure, the number of the frequency domain resource is one or more.

In the embodiments of the present disclosure, there may be one or more frequency domain resource identifiers in the positioning report. Correspondingly, the carrier phase information in the positioning report may correspond to one frequency domain resource, or may correspond to more than one frequency domain resources. Typically, the more than one frequency domain resource identifier corresponding to the carrier phase information are two frequency domain resource identifiers.

In the positioning method based on a carrier phase provided by the embodiments of the present disclosure, the carrier phase information may be obtained by performing measurement using one frequency domain resource or more than one frequency domain resource, so that the whole cycle part of the carrier phase is accurately determined, and the positioning accuracy for performing positioning based on a carrier phase is improved.

In the positioning method based on a carrier phase provided by the embodiments of the present disclosure, the carrier phase information may include at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

In the embodiments of the present disclosure, for the carrier phase information in the positioning report, the carrier phase information may be obtained by performing measurement based on one positioning signal. In some embodiments, for example, the carrier phase measurement value obtained by performing measurement based on the positioning signal may be directly used as the carrier phase information in the positioning report.

In some embodiments, for example, as shown in FIG. 3, the transmitting device transmits the positioning signal 1 on the frequency domain 1, the frequency domain 2 and the frequency domain 3. Based on measurement of the positioning signal 1 on each frequency domain of at least one frequency domain, the receiving device may obtain a corresponding carrier phase measurement value, such as the carrier phase measurement value 1 on the frequency domain 1, the carrier phase measurement value 2 on the frequency domain 2, and the carrier phase measurement value 3 on the frequency domain 3. The corresponding carrier phase measurement value may be used as the carrier phase information. The positioning report includes at least one of: the carrier phase information of the frequency domain 1 and the frequency domain resource identifier of the frequency domain 1, the carrier phase information of frequency domain 2 and the frequency domain resource identifier of the frequency domain 2, or the carrier phase information of the frequency domain 3 and the frequency domain resource identifier of the frequency domain 3. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device.

In the embodiments of the present disclosure, for the carrier phase information in the positioning report, a carrier phase measurement value may be obtained by performing measurement based on one positioning signal, and then a difference between the carrier phase measurement value and the reference carrier phase value may be obtained. In some embodiments, for example, a carrier phase measurement value is obtained by the TRP performing measurement on an uplink positioning signal, a difference between the carrier phase measurement value and the reference carrier phase value is obtained by subtracting between the carrier phase measurement value and the reference carrier phase value, and the difference is used as the carrier phase information in the positioning report. The reference carrier phase value in the present disclosure may be specified in a protocol, or may be configured by an LMF, which is not limited in the present disclosure.

In some embodiments, for example, as shown in FIG. 4, the transmitting device transmits the positioning signal 1 on the frequency domain 1, the frequency domain 2 and the frequency domain 3. Based on measurement of the positioning signal 1 on each frequency domain of at least one frequency domain, the receiving device may obtain a corresponding carrier phase measurement value, such as the carrier phase measurement value 1 on the frequency domain 1, the carrier phase measurement value 2 on the frequency domain 2, and the carrier phase measurement value 3 on the frequency domain 3. A difference between the corresponding carrier phase measurement value and the reference carrier phase value may be obtained by subtracting between the corresponding carrier phase measurement value and the pre-configured reference carrier phase value, and the difference may be used as the carrier phase information corresponding to the corresponding frequency domain. The positioning report includes at least one of: the carrier phase information of the frequency domain 1 and the frequency domain resource identifier of the frequency domain 1, where the carrier phase information of the frequency domain 1 is obtained according to a difference between the carrier phase measurement value on the frequency domain 1 and the reference carrier phase value; the carrier phase information of the frequency domain 2 and the frequency domain resource identifier of the frequency domain 2, where the carrier phase information of the frequency domain 2 is obtained according to the difference between the carrier phase measurement value on the frequency domain 2 and the reference carrier phase value; or, the carrier phase information of the frequency domain 3 and the frequency domain resource identifier of the frequency domain 3, where the carrier phase information of the frequency domain 3 is obtained according to the difference between the carrier phase measurement value on the frequency domain 3 and the reference carrier phase value. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device.

In the embodiments of the present disclosure, for the carrier phase information in the positioning report, the carrier phase information may be obtained based on the difference between the carrier phase measurement values obtained by performing measurement based on more than one positioning signal. In some embodiments, the difference between the carrier phase measurement values obtained by performing measurement based on more than one positioning signal may be directly used as the carrier phase information in the positioning report. In some other examples, the carrier phase information may also be obtained according to the difference between the carrier phase measurement values obtained by performing measurement based on more than one positioning signal and according to a preset rule, which is not limited in the present disclosure.

In some embodiments, for example, the transmitting device transmits more than one positioning signal respectively on the frequency domain 1, the frequency domain 2, and the frequency domain 3. Based on measurement of the more than one positioning signal on each frequency domain of at least one frequency domain, the receiving device may obtain a carrier phase measurement value corresponding to each positioning signal. Alternatively, based on respective measurement of the more than one positioning signal on different frequency domains, the carrier phase measurement values respectively corresponding to the more than one positioning signal may be obtained. For example, based on measurement of two positioning signals on each frequency domain, the carrier phase measurement values respectively corresponding to the two positioning signals are obtained. Alternatively, based on measurement of two positioning signals on different frequency domains, the carrier phase measurement values respectively corresponding to the two positioning signals are obtained. A difference between the two carrier phase measurement values may be obtained by subtracting between the two carrier phase measurement values, and the difference may be used as the corresponding carrier phase information. Among them, the transmitting device is a terminal device, and the receiving device is a TRP; or, the transmitting device is a TRP, and the receiving device is a terminal device.

In an example, as shown in FIG. 5, the carrier phase measurement values obtained by performing measurement according to more than one positioning signal may correspond to the same frequency domain resource. Typically, the more than one positioning signal are two downlink positioning signals. For example, the carrier phase measurement value 1 corresponds to the positioning signal 1 on the frequency domain 1, and the carrier phase measurement value 2 corresponds to the positioning signal 2 on the frequency domain 1; the carrier phase measurement value 3 corresponds to the positioning signal 1 on the frequency domain 2, and the carrier phase measurement value 4 corresponds to the positioning signal 2 on the frequency domain 2; and the carrier phase measurement value 5 corresponds to the positioning signal 1 on the frequency domain 3, and the carrier phase measurement value 6 corresponds to the positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according the difference between the two carrier phase measurement values obtained according to the positioning signal 1 and the positioning signal 2 on the frequency domain 1, that is, obtained according the difference between the carrier phase measurement value 1 corresponding to the positioning signal 1 and the carrier phase measurement value 2 corresponding to the positioning signal 2; the carrier phase information of the frequency domain 2 and the frequency domain resource identifier of the frequency domain 2, where the carrier phase information of the frequency domain 2 is obtained according to the difference between the two carrier phase measurement values obtained according to the positioning signal 1 and the positioning signal 2 on the frequency domain 2, that is, obtained according to the difference between the carrier phase measurement value 3 corresponding to the positioning signal 1 and the carrier phase measurement value 4 corresponding to the positioning signal 2; or, the carrier phase information of the frequency domain 3 and the frequency domain resource identifier of the frequency domain 3, where the carrier phase information of the frequency domain 3 is obtained according to the difference between the two carrier phase measurement values obtained according to the positioning signal 1 and the positioning signal 2 on the frequency domain 3, that is, obtained according to the difference between the carrier phase measurement value 5 corresponding to the positioning signal 1 and the carrier phase measurement value 6 corresponding to the positioning signal 2.

In another example, as shown in FIG. 6, the carrier phase measurement values obtained by performing measurement according to the more than one positioning signal may correspond to different frequency domain resources. For example, the carrier phase measurement value 1 corresponds to the positioning signal 1 on the frequency domain 1, and the carrier phase measurement value 2 corresponds to the positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to a difference between the carrier phase measurement value 1 corresponding to the positioning signal 1 on the frequency domain 1 and the carrier phase measurement value 2 corresponding to the positioning signal 2 on the frequency domain 2. Therefore, it is convenient for the second device to perform positioning according to the carrier phase information and the frequency domain resource identifier of each frequency domain in the positioning report. Certainly, the positioning report may further include any other plurality of frequency domain resource identifiers and the corresponding carrier phase information, for example, any two frequency domain resource identifiers, which is not limited in the present disclosure.

In the embodiments of the present disclosure, for the carrier phase information in the positioning report, the carrier phase information may be obtained based on the difference between the carrier phase measurement values obtained by performing measurement on different frequency domain resources according to one positioning signal. In some embodiments, the difference between the carrier phase measurement values obtained by performing measurement on different frequency domain resources according to the positioning signal may be directly used as the carrier phase information in the positioning report. In some other examples, the carrier phase information may also be obtained according to the difference between the carrier phase measurement values obtained by performing measurement on different frequency domain resources according to the positioning signal, and according to a preset rule, which is not limited in the present disclosure.

In some embodiments, for example, as shown in FIG. 3, the transmitting device transmits the positioning signal 1 on the frequency domain 1, the frequency domain 2 and the frequency domain 3. Based on measurement of the positioning signal 1 on each frequency domain of at least two frequency domains, the receiving device may obtain a carrier phase measurement value corresponding to the positioning signal 1. For example, the positioning signal 1 may be measured on the frequency domain 1 and the frequency domain 2 to obtain carrier phase measurement values corresponding to the positioning signal 1 on the frequency domain 1 and the frequency domain 2, for example, the carrier phase measurement value 1 on the frequency domain 1 and the carrier phase measurement value 2 on the frequency domain 2. A difference between the two carrier phase measurement values may be obtained by subtracting between the two carrier phase measurement values, and the difference may be used as the carrier phase information. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 of the positioning signal 1 on the frequency domain 1 and the carrier phase measurement value 2 of the positioning signal 1 on the frequency domain 2. Therefore, it is convenient for the second device to perform positioning according to the carrier phase information and the frequency domain resource identifier of each frequency domain in the positioning report. Among them, the transmitting device is a terminal device, and the receiving device is a TRP; or, the transmitting device is a TRP, and the receiving device is a terminal device. It may be understood that the positioning report may further include any other plurality of frequency domain resource identifiers and corresponding carrier phase information, for example, any two frequency domain resource identifiers, which is not limited in the present disclosure.

In the positioning method based on a carrier phase provided by the embodiments of the present disclosure, the carrier phase information may be obtained by performing measurement on one or more different frequency domain resources using one positioning signal, or may be obtained by using one positioning signal and a reference carrier phase value, or may be obtained by performing measurement using more than one positioning signal. The positioning method may be applied to various different positioning scenarios, and the application range of the positioning measurement solution may be expanded.

In the positioning method based on a carrier phase provided by the embodiments of the present disclosure, the difference between the carrier phase measurement values obtained by performing measurement based on more than one positioning signal may include at least one of: a difference between carrier phase measurement values obtained by performing measurement based on more than one downlink positioning signal; a difference between carrier phase measurement values obtained by performing measurement based on more than one uplink positioning signal; or, a difference between carrier phase measurement values obtained by performing measurement based on one downlink positioning signal and one uplink positioning signal.

In the embodiments of the present disclosure, the difference between the carrier phase measurement values obtained by performing measurement using more than one positioning signal may be a difference between carrier phase measurement values obtained by performing measurement using more than one downlink positioning signal. In some embodiments, for example, the more than one downlink positioning signal are two downlink positioning signals.

In some embodiments, for example, the transmitting device respectively transmits more than one positioning signal on the frequency domain 1, the frequency domain 2, and the frequency domain 3. Based on measurement of the more than one downlink positioning signal on each frequency domain of at least one frequency domain, the receiving device may obtain a carrier phase measurement value corresponding to each downlink positioning signal. For example, based on respective measurement of two downlink positioning signals on each frequency domain of at least one frequency domain, carrier phase measurement values respectively corresponding to the two downlink positioning signals are to obtained. Alternatively, based on respective measurement of two downlink positioning signals on different frequency domains, carrier phase measurement values respectively corresponding to the two downlink positioning signals are to obtained. A difference between the carrier phase measurement values corresponding to the two downlink positioning signals may be obtained by subtracting between the carrier phase measurement values respectively corresponding to the two downlink positioning signals, and the difference may be used as the corresponding carrier phase information. Among them, the transmitting device is a terminal device, and the receiving device is a TRP; or, the transmitting device is a TRP, and the receiving device is a terminal device.

In an example, as shown in FIG. 7, the carrier phase measurement values obtained by performing measurement using more than one downlink positioning signal may correspond to the same frequency domain resource. Typically, the more than one downlink positioning signal are two downlink positioning signals. For example, the carrier phase measurement value 1 corresponds to the downlink positioning signal 1 on the frequency domain 1, the carrier phase measurement value 2 corresponds to the downlink positioning signal 2 on the frequency domain 1, the carrier phase measurement value 3 corresponds to the downlink positioning signal 1 on the frequency domain 2, the carrier phase measurement value 4 corresponds to the downlink positioning signal 2 on the frequency domain 2, the carrier phase measurement value 5 corresponds to the downlink positioning signal 1 on the frequency domain 3, and the carrier phase measurement value 6 corresponds to the downlink positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the downlink positioning signal 1 and the downlink positioning signal 2 on the frequency domain 1, that is, obtained according to the difference between the carrier phase measurement value 1 corresponding to the downlink positioning signal 1 and the carrier phase measurement value 2 corresponding to the downlink positioning signal 2; the carrier phase information of the frequency domain 2 and the frequency domain resource identifier of the frequency domain 2, where the carrier phase information of the frequency domain 2 is obtained according to the difference between the carrier phase measurement values respectively corresponding to the downlink positioning signal 1 and the downlink positioning signal 2 on the frequency domain 2, that is, obtained according to the difference between the carrier phase measurement value 3 corresponding to the downlink positioning signal 1 and the carrier phase measurement value 4 corresponding to the downlink positioning signal 2; or, the carrier phase information of the frequency domain 3 and the frequency domain resource identifier of the frequency domain 3, where the carrier phase information of the frequency domain 3 is obtained according to the difference between the carrier phase measurement values respectively corresponding to the downlink positioning signal 1 and the downlink positioning signal 2 on the frequency domain 3, that is, obtained according to the difference between the carrier phase measurement value 5 corresponding to the downlink positioning signal 1 and the carrier phase measurement value 6 corresponding to the downlink positioning signal 2.

In another example, as shown in FIG. 8, the carrier phase measurement values obtained by performing measurement using more than one downlink positioning signal may correspond to different frequency domain resources. Typically, the more than one downlink positioning signal are two downlink positioning signals. For example, the carrier phase measurement value 1 corresponds to the downlink positioning signal 1 on the frequency domain 1, and the carrier phase measurement value 2 corresponds to the downlink positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the downlink positioning signal 1 on the frequency domain 1 and the carrier phase measurement value 2 corresponding to the downlink positioning signal 2 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, the more than one downlink positioning signal may also correspond to different frequency domain resources. Correspondingly, the positioning report should simultaneously include the frequency domain resource identifiers of more than one different frequency domain resources corresponding to the more than one downlink positioning signal.

In the embodiments of the present disclosure, the difference between the carrier phase measurement values obtained by performing measurement using more than one positioning signal may be a difference between carrier phase measurement values obtained by performing measurement using more than one uplink positioning signal. In some embodiments, for example, the more than one uplink positioning signal are two uplink positioning signals.

In some embodiments, for example, the transmitting device respectively transmits more than one positioning signal on the frequency domain 1, the frequency domain 2, and the frequency domain 3. Based on measurement of more than one uplink positioning signal based on each frequency domain of at least one frequency domain, the receiving device may obtain a carrier phase measurement value corresponding to each uplink positioning signal. For example, based on respective measurement of two uplink positioning signals on each frequency domain of at least one frequency domain, carrier phase measurement values respectively corresponding to the two uplink positioning signals are obtained. Alternatively, based on respective measurement of two uplink positioning signals on different frequency domains, carrier phase measurement values respectively corresponding to the two uplink positioning signals are obtained. A difference between the carrier phase measurement values corresponding to the two uplink positioning signals may be obtained by subtracting between the carrier phase measurement values respectively corresponding to the two uplink positioning signals, and the difference may be used as the corresponding carrier phase information. Among them, the transmitting device is a terminal device, and the receiving device is a TRP; or, the transmitting device is a TRP, and the receiving device is a terminal device.

In an example, as shown in FIG. 9, the carrier phase measurement values obtained by performing measurement using more than one uplink positioning signal may correspond to the same frequency domain resource. Typically, the more than one uplink positioning signal are two uplink positioning signals. For example, the carrier phase measurement value 1 corresponds to the uplink positioning signal 1 on the frequency domain 1, the carrier phase measurement value 2 corresponds to the uplink positioning signal 2 on the frequency domain 1, the carrier phase measurement value 3 corresponds to the uplink positioning signal 1 on the frequency domain 2, the carrier phase measurement value 4 corresponds to the uplink positioning signal 2 on the frequency domain 2, the carrier phase measurement value 5 corresponds to the uplink positioning signal 1 on the frequency domain 3, and the carrier phase measurement value 6 corresponds to the uplink positioning signal 2 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the uplink positioning signal 1 and the uplink positioning signal 2 on the frequency domain 1, that is, obtained according to the difference between the carrier phase measurement value 1 corresponding to the uplink positioning signal 1 and the carrier phase measurement value 2 corresponding to the uplink positioning signal 2; the carrier phase information of the frequency domain 2 and the frequency domain resource identifier of the frequency domain 2, where the carrier phase information of the frequency domain 2 is obtained according to the difference between the carrier phase measurement values respectively corresponding to the uplink positioning signal 1 and the uplink positioning signal 2 on the frequency domain 2, that is, obtained according to the difference between the carrier phase measurement value 3 corresponding to the uplink positioning signal 1 and the carrier phase measurement value 4 corresponding to the uplink positioning signal 2; or, the carrier phase information of the frequency domain 3 and the frequency domain resource identifier of the frequency domain 3, where the carrier phase information of the frequency domain 3 is obtained according to the difference between the carrier phase measurement values respectively corresponding to the uplink positioning signal 1 and the uplink positioning signal 2 on the frequency domain 3, that is, obtained according to the difference between the carrier phase measurement value 5 corresponding to the uplink positioning signal 1 and the carrier phase measurement value 6 corresponding to the uplink positioning signal 2.

In another example, as shown in FIG. 10, the carrier phase measurement values obtained by performing measurement using more than one uplink positioning signal may correspond to different frequency domain resources. Typically, the more than one uplink positioning signal are two uplink positioning signals. For example, the carrier phase measurement value 1 corresponds to the uplink positioning signal 1 on the frequency domain 1, and the carrier phase measurement value 2 corresponds to the uplink positioning signal 2 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the uplink positioning signal 1 on the frequency domain 1 and the carrier phase measurement value 2 corresponding to the uplink positioning signal 2 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, more than one uplink positioning signal may also correspond to different frequency domain resources. Correspondingly, the positioning report should simultaneously include the frequency domain resource identifiers of more than one different frequency domain resources corresponding to the more than one uplink positioning signal.

In the embodiments of the present disclosure, the difference between the carrier phase measurement values obtained by performing measurement using more than one positioning signal may be a difference between the carrier phase measurement values obtained by performing measurement using one downlink positioning signal and one uplink positioning signal.

In some embodiments, for example, the transmitting device respectively transmits more than one positioning signal on the frequency domain 1, the frequency domain 2, and the frequency domain 3. Based on measurement of one uplink positioning signal and one downlink positioning signal on each frequency domain of at least one frequency domain, the receiving device may obtain carrier phase measurement values corresponding to one uplink positioning signal and one downlink positioning signal. Alternatively, based on respective measurement of one uplink positioning signal and one downlink positioning signal on different frequency domains, carrier phase measurement values corresponding to one uplink positioning signal and one downlink positioning signal are obtained. For example, based on measurement of one uplink positioning signal and one downlink positioning signal on each frequency domain of at least one frequency domain, carrier phase measurement values respectively corresponding to one uplink positioning signal and one downlink positioning signal are obtained. Alternatively, based on respective measurement of one uplink positioning signal and one downlink positioning signal on different frequency domains, carrier phase measurement values respectively corresponding to one uplink positioning signal and one downlink positioning signal are obtained. A difference between the carrier phase measurement values corresponding to one uplink positioning signal and one downlink positioning signal may be obtained by subtracting between the carrier phase measurement values respectively corresponding to one uplink positioning signal and one downlink positioning signal, and the difference may be used as the carrier phase information corresponding to the respective frequency domain. Among them, the transmitting device is a terminal device, and the receiving device is a TRP; or, the transmitting device is a TRP, and the receiving device is a terminal device.

In an example, as shown in FIG. 11, the carrier phase measurement values corresponding to one uplink positioning signal and one downlink positioning signal may correspond to the same frequency domain resource. For example, the carrier phase measurement value 1 corresponds to the downlink positioning signal 1 on the frequency domain 1, the carrier phase measurement value 2 corresponds to the uplink positioning signal 1 on the frequency domain 1, the carrier phase measurement value 3 corresponds to the downlink positioning signal 1 on the frequency domain 2, the carrier phase measurement value 4 corresponds to the uplink positioning signal 1 on the frequency domain 2, the carrier phase measurement value 5 corresponds to the downlink positioning signal 1 on the frequency domain 3, and the carrier phase measurement value 6 corresponds to the uplink positioning signal 1 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the uplink positioning signal 1 and the downlink positioning signal 1 on the frequency domain 1, that is, obtained according to the difference between the carrier phase measurement value 1 corresponding to the downlink positioning signal 1 and the carrier phase measurement value 2 corresponding to the uplink positioning signal 1; the carrier phase information of the frequency domain 2 and the frequency domain resource identifier of the frequency domain 2, where the carrier phase information of the frequency domain 2 is obtained according to the difference between the carrier phase measurement values respectively corresponding to the uplink positioning signal 1 and the downlink positioning signal 1 on the frequency domain 2, that is, obtained according to the difference between the carrier phase measurement value 3 corresponding to the downlink positioning signal 1 and the carrier phase measurement value 4 corresponding to the uplink positioning signal 1; or, the carrier phase information of the frequency domain 3 and the frequency domain resource identifier of the frequency domain 3, where the carrier phase information of the frequency domain 3 is obtained according to the difference between the carrier phase measurement values corresponding to the uplink positioning signal 1 and the downlink positioning signal 1 on the frequency domain 3, that is, obtained according to the difference between the carrier phase measurement value 5 corresponding to the downlink positioning signal 1 and the carrier phase measurement value 6 corresponding to the uplink positioning signal 1.

In another example, as shown in FIG. 12, the carrier phase measurement values corresponding to one uplink positioning signal and one downlink positioning signal may correspond to different frequency domain resources. For example, the carrier phase measurement value 1 corresponds to the downlink positioning signal 1 on the frequency domain 1, and the carrier phase measurement value 2 corresponds to the uplink positioning signal 1 on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the downlink positioning signal 1 on the frequency domain 1 and the carrier phase measurement value 2 corresponding to the uplink positioning signal 1 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

It may be understood that, in some embodiments, one uplink positioning signal and one downlink positioning signal may also correspond to different frequency domain resources. Correspondingly, the positioning report should simultaneously include frequency domain resource identifiers of different frequency domain resources corresponding to one uplink positioning signal and one downlink positioning signal.

In the positioning method based on a carrier phase provided by the embodiments of the present disclosure, the difference between the carrier phase measurement values may be obtained by performing measurement using an uplink positioning signal and/or a downlink positioning signal. The positioning method may be applied to uplink positioning measurement and/or downlink positioning measurement, and may be applicable to various different positioning scenarios, so that the application range of the positioning measurement solution is wider.

In the positioning method based on a carrier phase provided by embodiments of the present disclosure, the carrier phase information includes a difference between carrier phase measurement values obtained by performing measurement based on more than one positioning signal. For the difference between the carrier phase measurement values obtained by performing measurement based on more than one positioning signal, it may include that: the difference between the carrier phase measurement values obtained by performing measurement based on the more than one positioning signal corresponds to one frequency domain resource identifier; or, the difference between the carrier phase measurement values obtained by performing measurement based on the more than one positioning signal corresponds to more than one frequency domain resource identifier.

In the embodiments of the present disclosure, the difference between the carrier phase measurement values obtained by performing measurement using more than one positioning signal may correspond to one frequency domain resource identifier. For example, based on more than one positioning signal measured on the same frequency domain resource, the difference between the corresponding carrier phase measurement values is obtained.

In some embodiments, for example, the transmitting device respectively transmits more than one positioning signal on the frequency domain 1, the frequency domain 2, and the frequency domain 3. Based on more than one positioning signal measured on each frequency domain of at least one frequency domain, the receiving device may obtain the carrier phase measurement values corresponding to the more than one positioning signal. For example, based on more than one positioning signal measured on each frequency domain, carrier phase measurement values respectively corresponding to the more than one positioning signal are obtained. Typically, more than one positioning signal are two positioning signals. A difference between the carrier phase measurement values corresponding to the two positioning signals may be obtained by subtracting between the carrier phase measurement values corresponding to the two positioning signals, and the difference may be used as the carrier phase information corresponding to the respective frequency domain. Among them, the transmitting device is a terminal device, and the receiving device is a TRP; or, the transmitting device is a TRP, and the receiving device is a terminal device.

In an example, for example, as shown in FIG. 5, FIG. 7, FIG. 9, or FIG. 11, it is assumed that the carrier phase measurement values corresponding to more than one positioning signal correspond to the same frequency domain resource, and typically, the more than one positioning signal are two positioning signals. For example, the carrier phase measurement value 1 and the carrier phase measurement value 2 respectively correspond to two positioning signals on the frequency domain 1; the carrier phase measurement value 3 and the carrier phase measurement value 4 respectively correspond to two positioning signals 1 on the frequency domain 2; and, the carrier phase measurement value 5 and the carrier phase measurement value 6 respectively correspond to two positioning signals 1 on the frequency domain 3. The positioning report includes at least one of: the carrier phase information of the frequency domain 1 and the frequency domain resource identifier of the frequency domain 1, where the carrier phase information of the frequency domain 1 is obtained according to the difference between the carrier phase measurement values respectively corresponding to the two positioning signals on the frequency domain 1, that is, obtained according to the difference between the carrier phase measurement value 1 and the carrier phase measurement value 2; the carrier phase information of the frequency domain 2 and the frequency domain resource identifier of the frequency domain 2, where the carrier phase information of the frequency domain 2 is obtained according to the difference between the carrier phase measurement values respectively corresponding to the two positioning signals on the frequency domain 2, that is, obtained according to the difference between the carrier phase measurement value 3 and the carrier phase measurement value 4; or, the carrier phase information of the frequency domain 3 and the frequency domain resource identifier of the frequency domain 3, where the carrier phase information of the frequency domain 3 is obtained according to the difference between the carrier phase measurement values respectively corresponding to the two positioning signals on the frequency domain 3, that is, obtained according to the difference between the carrier phase measurement value 5 and the carrier phase measurement value 6. Therefore, it is convenient for the second device to perform positioning according to the carrier phase information and the frequency domain resource identifier of each frequency domain in the positioning report.

In the embodiments of the present disclosure, the difference between the carrier phase measurement values obtained by performing measurement using more than one positioning signal may correspond to more than one frequency domain resource identifier. For example, based on more than one positioning signal measured on different plurality of frequency domain resources, a difference between corresponding carrier phase measurement values may be obtained. In some embodiments, if the more than one positioning signal are two positioning signals, the two positioning signals may be measured on different frequency domain resources respectively. For example, the carrier phase measurement values of the corresponding positioning signals are obtained based on respective measurement on two different frequency domain resources, and the difference between the carrier phase measurement values is obtained based on the carrier phase measurement values of the corresponding positioning signals on different frequency domain resources.

In some embodiments, for example, the transmitting device respectively transmits more than one positioning signal on the frequency domain 1, the frequency domain 2, and the frequency domain 3. Based on more than one positioning signal measured on different frequency domains, the receiving device may obtain the carrier phase measurement values respectively corresponding to the more than one positioning signal. For example, based on the positioning signal respectively measured on different frequency domains, the carrier phase measurement values respectively corresponding to the more than one positioning signal are obtained. Typically, the more than one positioning signal are two positioning signals. A difference between the carrier phase measurement values corresponding to the two positioning signals may be obtained by subtracting between the carrier phase measurement values corresponding to the two positioning signals, and the difference may be used as the corresponding carrier phase information. Among them, the transmitting device is a terminal device, and the receiving device is a TRP; or, the transmitting device is a TRP, and the receiving device is a terminal device.

In an example, for example, as shown in FIG. 6, FIG. 8, FIG. 10, or FIG. 12, it is assumed that the carrier phase measurement values corresponding to more than one positioning signal correspond to different plurality of frequency domain resources, and typically, the more than one positioning signal are two positioning signals. For example, the carrier phase measurement values corresponding to the two positioning signals correspond to two different frequency domain resources, such as the frequency domain 1 and the frequency domain 2. For example, the carrier phase measurement value 1 corresponds to the positioning signal on the frequency domain 1, and the carrier phase measurement value 2 corresponds to the positioning signal on the frequency domain 2. The positioning report includes: the carrier phase information, the frequency domain resource identifier of the frequency domain 1, and the frequency domain resource identifier of the frequency domain 2, where the carrier phase information is obtained according to the difference between the carrier phase measurement value 1 corresponding to the positioning signal on the frequency domain 1 and the carrier phase measurement value 2 corresponding to the positioning signal on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

In an example, the difference between the carrier phase measurement values may correspond to the same frequency domain resource or different frequency domain resources. That is, the difference between the carrier phase measurement values corresponds to one frequency domain resource identifier or more than one frequency domain resource identifier.

In the positioning method based on a carrier phase provided by the embodiments of the present disclosure, the carrier phase information may be obtained by performing measurement using different frequency domain resources based on one frequency domain resource identifier or more than one frequency domain resource identifier, so as to accurately determine the whole cycle part of the carrier phase, thus improving the positioning accuracy for performing positioning based on the carrier phase.

In the positioning method based on a carrier phase provided by embodiments of the present disclosure, more than one positioning signal include a reference positioning signal.

In the embodiments of the present disclosure, one of the more than one positioning signal may be a reference positioning signal.

According to the positioning method based on a carrier phase provided in the embodiments of the present disclosure, more than one positioning signal includes a reference positioning signal, so that the difference between the carrier phase measurement values may be more accurately obtained based on more than one positioning signal. For example, the carrier phase measurement value corresponding to the reference positioning signal is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In the positioning method based on a carrier phase provided by the embodiments of the present disclosure, the more than one positioning signal corresponds to a same TRP, or corresponds to different TRPs.

In the embodiments of the present disclosure, more than one positioning signal may correspond to the same TRP, or more than one positioning signal may correspond to different TRPs. For example, assuming that more than one positioning signal are two positioning signals, the two positioning signals may correspond to the same TRP. Alternatively, the two positioning signals may correspond to two different TRPs, that is, one positioning signal corresponds to one TRP, and TRPs corresponding to the two positioning signals are different from each other.

According to the positioning method based on a carrier phase provided in the embodiments of the present disclosure, the more than one positioning signal may correspond to the same TRP or different TRPs, so that the positioning method is applicable to various different positioning scenarios, and the application range of the positioning measurement solution is wider.

In the positioning method based on a carrier phase provided by embodiments of the present disclosure, more than one positioning signal corresponds to different TRPs, and the different TRPs include a reference TRP.

In the embodiments of the present disclosure, when more than one positioning signal corresponds to different TRPs, one TRP in the different TRPs may be a reference TRP.

In the positioning method based on a carrier phase provided by embodiments of the present disclosure, different TRPs corresponding to more than one positioning signal may include a reference TRP, so that the difference between the carrier phase measurement values may be more accurately obtained based on more than one positioning signal. For example, the carrier phase measurement value of the positioning signal from the reference TRP is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In the positioning method based on a carrier phase provided by embodiments of the present disclosure, the carrier phase information includes a difference between the carrier phase measurement values obtained by performing measurement on different frequency domain resources based on one positioning signal, and the difference between the carrier phase measurement values obtained by performing measurement on different frequency domain resources based on one positioning signal corresponds to more than one frequency domain resource identifier.

In the embodiments of the present disclosure, the carrier phase information may be obtained according to a difference between carrier phase measurement values obtained by performing measurement on different frequency domain resources based on one positioning signal, where the difference between the carrier phase measurement values corresponds to more than one frequency domain resource identifier. It may be understood that more than one frequency domain resource identifier corresponding to the difference between the carrier phase measurement values may correspond to different frequency domain resources on which the carrier phase measurement values are obtained.

For example, if the difference between the carrier phase measurement values is obtained by performing measurement on two frequency domain resources using one positioning signal, the more than one frequency domain resource identifier corresponding to the difference may include the frequency domain resource identifiers corresponding to the two frequency domain resources on which the carrier phase measurement values are obtained.

In some embodiments, for example, the transmitting device transmits the positioning signal 1 on the frequency domain 1, the frequency domain 2 and the frequency domain 3. Based on the positioning signal 1 measured on each frequency domain of at least one frequency domain, the receiving device may obtain the carrier phase measurement values corresponding to the positioning signal 1 on different frequency domains. For example, based on one positioning signal 1 measured on different frequency domains, the carrier phase measurement values corresponding to the positioning signal 1 on different frequency domains may be obtained, such as the carrier phase measurement value 1 on the frequency domain 1, the carrier phase measurement value 2 on the frequency domain 2, and the carrier phase measurement value 3 on the frequency domain 3. A difference between the carrier phase measurement values corresponding to the positioning signal 1 on different frequency domains may be obtained by subtracting between the carrier phase measurement values corresponding to the positioning signal 1 on different frequency domains, and the difference may be used as the corresponding carrier phase information. Among them, the transmitting device is a terminal device, and the receiving device is a TRP; or, the transmitting device is a TRP, and the receiving device is a terminal device.

In an example, for example, as shown in FIG. 3, the carrier phase measurement value 1 and the carrier phase measurement value 2 corresponding to the positioning signal 1 correspond to two different frequency domain resources, such as the frequency domain 1 and the frequency domain 2. The positioning report includes: the carrier phase information, the frequency domain resource identifier of the frequency domain 1, and the frequency domain resource identifier of the frequency domain 2, where the carrier phase information is obtained according to difference between the carrier phase measurement value 1 corresponding to the positioning signal 1 on the frequency domain 1 and the carrier phase measurement value 2 corresponding to the positioning signal 1 on the frequency domain 2. Therefore, it is convenient for the second device to perform positioning according to the carrier phase information and the frequency domain resource identifier of each frequency domain in the positioning report. It may be understood that the positioning report may further include any other plurality of frequency domain resource identifiers and corresponding carrier phase information, for example, any two frequency domain resource identifiers, which is not limited in the present disclosure.

According to the positioning method based on a carrier phase provided by the embodiment of the present disclosure, the carrier phase information may be obtained by performing measurement on different frequency domain resources using one positioning signal based on different frequency domain resource identifiers, thus the whole cycle part of the carrier phase may be accurately determined, and the positioning accuracy for performing positioning based on the carrier phase may be improved.

In the positioning method based on a carrier phase provided by embodiments of the present disclosure, FIG. 16 is another flowchart of a positioning method based on a carrier phase shown according to an example embodiment. As shown in FIG. 16, the method further includes the following step.

In step S51, configuration information is sent to the first device.

In the embodiments of the present disclosure, the second device may send configuration information to the first device, where the configuration information is used to indicate a configuration parameter of the positioning signal.

In the embodiments of the present disclosure, before receiving the positioning report sent by the first device, the second device may send the configuration information to the first device.

In the positioning method based on a carrier phase provided by the embodiments of the present disclosure, the configuration parameter for indicating the positioning signal may be sent, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In the positioning method based on a carrier phase provided by the embodiments of the present disclosure, the configuration information may include at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signal, a comb-size of the positioning signal, a starting symbol position of the positioning signal, an SCS of the positioning signal, QCL information of the positioning signal, a number of samples for measurement according to the positioning signal, a bandwidth of the positioning signal, a starting PRB position of the positioning signal, a transmission power for the positioning signal, or a pathloss reference signal of the positioning signal.

In the positioning method based on a carrier phase provided by the embodiments of the present disclosure, a plurality of configuration parameters of the positioning signal are provided, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In the positioning method based on a carrier phase provided by the embodiments of the present disclosure, the positioning report may include at least one of: carrier phase error group information, measurement result information, a probability that a path corresponding to the carrier phase information is a line-of-sight (LoS) path, or corresponding Doppler parameter information.

In the embodiments of the present disclosure, the carrier phase error group information may include an ID (or index) of a carrier phase error group and/or an error value of the carrier phase error group. Among them, the carrier phase errors in the carrier phase error group are the same. It may be understood that, in some cases, different carrier phase error groups may be divided based on more than one different carrier phase errors according to a preset division rule, and the error value of the carrier phase error group may be obtained based on any carrier phase error in the group. In another case, more than one carrier phase with the same error value may also be divided into the same carrier phase error group according to the determined carrier phase error, which is not limited in the present disclosure.

In the embodiments of the present disclosure, the positioning report may include carrier phase information and a frequency domain resource identifier, and the positioning report may further include at least one of: carrier phase error group information, measurement result information, a probability that a path corresponding to the carrier phase information is a LOS path, or corresponding Doppler parameter information.

In the positioning method based on a carrier phase provided by the embodiments of the present disclosure, the positioning report may include a plurality of different pieces of information. In this way, the network device, for example, the core network device, may accurately determine the whole cycle part of the carrier phase based on the positioning report, thus improving the positioning accuracy for performing positioning based on the carrier phase.

In the positioning method based on a carrier phase provided by embodiments of the present disclosure, the measurement result information may include at least one of: an RSRP, an AoA, an AoD, a ToA, a TDoA, a DL RSTD, a UL RToA, a Rx Tx time difference of the first device or the second device, an RTT, a TEG of the first device or the second device, a REG of the first device or the second device, or a TREG of the first device or the second device.

In some embodiments, the uplink relative arrival time may be denoted as T_{UL-RToA}.

In the embodiments of the present disclosure, the positioning report may include carrier phase information and a frequency domain resource identifier. The positioning report may further include at least one of: carrier phase error group information, measurement result information, a probability that a path corresponding to the carrier phase information is a LOS path, or corresponding Doppler parameter information. Among them, the measurement result information may include at least one of: an RSRP, an AoA, an AoD, a ToA, a TDoA, a DL RSTD, a UL RToA, a Rx Tx time difference of the first device or the second device, an RTT, a TEG of the first device or the second device, a REG of the first device or the second device, or a TREG of the first device or the second device.

In the positioning method based on a carrier phase provided by the embodiments of the present disclosure, the measurement result information may further include a plurality of different pieces of information. In this way, the network device, for example, the core network device, may accurately determine the whole cycle part of the carrier phase based on the positioning report, thus improving the positioning accuracy for performing positioning based on the carrier phase.

In the positioning method based on a carrier phase provided by the embodiments of the present disclosure, the positioning signal may include a PRS or an SRS.

In the embodiments of the present disclosure, the RPS may correspond to the downlink positioning signal mentioned above, and the SRS may correspond to the uplink positioning signal mentioned above.

Of course, in some embodiments, the positioning signal may be any other equivalent reference signal for positioning, which is not limited in the present disclosure.

In the embodiments of the present disclosure, the positioning signal may be a PRS, an SRS, and/or any other equivalent reference signal for positioning.

In the positioning method based on a carrier phase provided by the embodiments of the present disclosure, more accurate carrier phase information may be obtained by performing measurement on the same frequency domain resource or different frequency domain resources based on the PRS and/or the SRS, so that the whole cycle part of the carrier phase is accurately determined, and the positioning accuracy for performing positioning based on the carrier phase is improved.

In the positioning method based on a carrier phase provided by the embodiments of the present disclosure, the first device is a terminal, and the second device is a core network device; alternatively, the first device is a TRP, and the second device is a core network device.

In the positioning method based on a carrier phase provided by the embodiments of the present disclosure, the first device may be UE or a TRP, and the second device may be a core network device, so as to adapt to an uplink positioning solution or a downlink positioning solution. The positioning method may be applicable to various different positioning scenarios, so that the application range of the positioning measurement solution is wider.

FIG. 17 is another flowchart of a positioning method based on a carrier phase shown according to an example embodiment. As shown in FIG. 17, the method may be applied to a second device, and the method may include the following steps.

In step S61, configuration information is sent to a first device.

In the embodiments of the present disclosure, the second device may send configuration information to the first device, where the configuration information is used to indicate a configuration parameter of the positioning signal.

In step S62, a positioning report sent by the first device is received.

In the embodiments of the present disclosure, the second device may receive a positioning report sent by the first device. The positioning report may include carrier phase information and a frequency domain resource identifier, where the carrier phase information includes at least one of a whole cycle part and a fractional part, and the frequency domain resource identifier is used to indicate a frequency domain resource identifier corresponding to the carrier phase information.

It may be understood that the positioning method based on a carrier phase applied to the second device provided by the embodiments of the present disclosure in FIG. 17 is similar to the positioning method based on a carrier phase in FIG. 15 and FIG. 16, and similar parts are not described here again.

In the present disclosure, the positioning report includes the frequency domain resource identifier corresponding to the carrier phase information, thus improving the positioning accuracy for performing positioning based on a carrier phase.

It may be understood that, the positioning method based on a carrier phase applied to the second device provided by the embodiments of the present disclosure is similar to the positioning method based on a carrier phase performed by the terminal, and the similar parts are not described here again.

Furthermore, it may be understood that the positioning method based on a carrier phase provided by the embodiments of the present disclosure may be applied to a positioning implementation process based on a carrier phase that is implemented by interaction between the first device and the second device. In the positioning method based on a carrier phase implemented by interaction between the first device and the second device, the first device and the second device each have related functions for implementing the foregoing embodiments, and details are not described herein again.

It should be noted that those skilled in the art may understand that the various implementations/embodiments involved in the embodiments of the present disclosure may be used in conjunction with the foregoing embodiments, or may be used independently. Whether they are used alone or in conjunction with the foregoing embodiments, the implementation principles are similar. In the implementations of the present disclosure, some embodiments are described in the manner of being used together. Of course, those skilled in the art may understand that such examples are not intended to limit the embodiments of the present disclosure.

Based on the same concept, according to embodiments of the present disclosure, there is further provided a positioning apparatus based on a carrier phase.

It may be understood that, to implement the foregoing functions, the positioning apparatus based on a carrier phase provided by the embodiments of the present disclosure includes corresponding hardware structures and/or software modules for performing the various functions. In combination of units and algorithm steps of the examples disclosed in the embodiments of the present disclosure, the embodiments of the present disclosure may be implemented in the form of hardware or a combination of hardware and computer software. Whether a function is performed in the manner of hardware or hardware driven by computer software, depends on particular applications and design constraint conditions of the technical solutions. Those skilled in the art may use different methods to implement the described functions for each particular application, however, it should not be considered that the implementation goes beyond the scope of the technical solutions of the embodiments of the present disclosure.

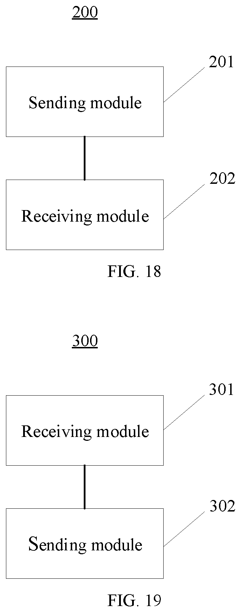

FIG. 18 is a schematic diagram of a positioning apparatus 200 based on a carrier phase shown according to an example embodiment. Referring to FIG. 18, the apparatus 200 includes a sending module 201 configured to send a positioning report to a second device. The positioning report includes carrier phase information and a frequency domain resource identifier, where the carrier phase information includes at least one of a whole cycle part and a fractional part, and the frequency domain resource identifier is used to indicate a frequency domain resource identifier corresponding to the carrier phase information.

According to the positioning method based on a carrier phase provided in the embodiments of the present disclosure, the carrier phase information of different frequency domain resources is identified by using the frequency domain resource identifier in the positioning report, so that the whole cycle part of the carrier phase is accurately determined by using the carrier phase information on different frequency domain resources, thus improving the positioning accuracy for performing positioning based on the carrier phase.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

The positioning method based on a carrier phase provided by the embodiments of the present disclosure may be applicable to frequency resource of different sizes, so that the whole cycle part of the carrier phase carrier may be accurately determined by using the carrier phase information on different frequency domain resources, thus improving the positioning accuracy for performing positioning based on the carrier phase.

In an implementation, there are one or more frequency domain resources.

According to the positioning method based on a carrier phase provided in the embodiments of the present disclosure, the carrier phase information may be obtained by performing measurement using one frequency domain resource or more than one frequency domain resource, so that the whole cycle part of the carrier phase is accurately determined, and the positioning accuracy for performing positioning based on the carrier phase is improved.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on the more than one positioning signal, or a difference between carrier phase measurement values obtained by performing measurement on different frequency domain resources based on one positioning signal.

According to the positioning method based on a carrier phase provided in the embodiments of the present disclosure, the carrier phase information may be obtained by performing measurement on one or more different frequency domain resources using one positioning signal, or may be obtained by using one positioning signal and a reference carrier phase value, or may be obtained by performing measurement using more than one positioning signal. The positioning method may be applied to various different positioning scenarios, and the application range of the positioning measurement solution is expanded.

In an implementation, the difference between the carrier phase measurement values obtained by performing measurement based on more than one positioning signal includes at least one of: a difference between carrier phase measurement values obtained by performing measurement based on more than one downlink positioning signal, a difference between carrier phase measurement values obtained by performing measurement based on more than one uplink positioning signal, or a difference between carrier phase measurement values obtained by performing measurement based on one downlink positioning signal and one uplink positioning signal.

According to the positioning method based on a carrier phase provided in the embodiments of the present disclosure, the difference between carrier phase measurement values may be obtained by performing measurement using an uplink positioning signal and/or a downlink positioning signal. The positioning method may be applied to uplink positioning measurement and/or downlink positioning measurement, and may be applicable to various different positioning scenarios, so that the application range of the positioning measurement solution is wider.

In an implementation, the carrier phase information includes the difference between carrier phase measurement values obtained by performing measurement based on more than one positioning signal. For the difference between the carrier phase measurement values obtained by performing measurement based on more than one positioning signal, it includes that: the difference between the carrier phase measurement values obtained by performing measurement based on more than one positioning signal corresponds to one frequency domain resource identifier; or, the difference between the carrier phase measurement values obtained by performing measurement based on more than one positioning signal corresponds to more than one frequency domain resource identifier.

According to the positioning method based on a carrier phase provided in the embodiments of the present disclosure, the carrier phase information may be obtained by performing measurement using different frequency domain resources based on one frequency domain resource identifier or more than one frequency domain resource identifier, so as to accurately determine the whole cycle part of the carrier phase, thus improving the positioning accuracy for performing positioning based on the carrier phase.

In an implementation, the more than one positioning signal include a reference positioning signal.

According to the positioning method based on a carrier phase provided in the embodiments of the present disclosure, the more than one positioning signal includes a reference positioning signal, so that the difference between the carrier phase measurement values may be more accurately obtained based on more than one positioning signal. For example, the carrier phase measurement value corresponding to the reference positioning signal is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In an implementation, the more than one positioning signal corresponds to a same transmission reception point (TRP), or corresponds to different TRPs.

According to the positioning method based on a carrier phase provided in the embodiments of the present disclosure, the more than one positioning signal may correspond to the same TRP or different TRPs, so that the positioning method is applicable to various different positioning scenarios, and the application range of the positioning measurement solution is wider.

In an implementation, the more than one positioning signal correspond to different TRPs, and the different TRPs include a reference TRP.

According to the positioning method based on a carrier phase provided in the embodiments of the present disclosure, different TRPs corresponding to the more than one positioning signal may include a reference TRP, so that the difference between the carrier phase measurement values may be more accurately obtained based on more than one positioning signal. For example, the carrier phase measurement value of the positioning signal from the reference TRP is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In an implementation, the carrier phase information includes a difference between the carrier phase measurement values obtained by performing measurement on different frequency domain resources based on one positioning signal, and the difference between the carrier phase measurement values obtained by performing measurement on different frequency domain resources based on one positioning signal corresponds to more than one frequency domain resource identifier.

According to the positioning method based on a carrier phase provided in the embodiment of the present disclosure, the carrier phase information may be obtained by performing measurement on different frequency domain resources using one positioning signal based on different frequency domain resource identifiers, so that the whole cycle part of the carrier phase is accurately determined, and the positioning accuracy for performing positioning based on the carrier phase is improved.

In an implementation, the apparatus 200 further includes a receiving module 202, configured to receive configuration information sent by a second device, where the configuration information is used to indicate a configuration parameter of the positioning signal.

According to the positioning method based on a carrier phase provided in the embodiments of the present disclosure, the configuration parameter for indicating the positioning signal may be received, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In an implementation, the configuration information includes at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signal, a comb-size of the positioning signal, a starting symbol position of the positioning signal, a subcarrier spacing (SCS) of the positioning signal, quasi-co-location (QCL) information of the positioning signal, a number of samples for measurement according to the positioning signal, a bandwidth of the positioning signal, a starting physical resource block (PRB) position of the positioning signal, a transmission power for the positioning signal, or a pathloss reference signal of the positioning signal.

According to the positioning method based on a carrier phase provided in the embodiments of the present disclosure, a plurality of configuration parameters of the positioning signal are provided, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In an implementation, the positioning report further includes at least one of: carrier phase error group information, measurement result information, a probability that a path corresponding to the carrier phase information is a line-of-sight (LoS) path, or corresponding Doppler parameter information.

According to the positioning method based on a carrier phase provided in the embodiments of the present disclosure, the positioning report may further include a plurality of different pieces of information. In this way, the network device, for example, the core network device, may accurately determine the whole cycle part of the carrier phase based on the positioning report, thus improving the positioning accuracy for performing positioning based on the carrier phase.

In an implementation, the measurement result information may include at least one of: a reference signal receiving power (RSRP), an angle of arrival (AoA), an angle of departure (AoD), a time of arrival (ToA), a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or, a Tx Rx time error group (TREG) of the first device or the second device.

According to the positioning method based on a carrier phase provided in the embodiments of the present disclosure, the measurement result information may further include a plurality of different pieces of information. In this way, the network device, for example, the core network device, may accurately determine the whole cycle part of the carrier phase based on the positioning report, thus improving the positioning accuracy for performing positioning based on the carrier phase.

In an implementation, the positioning signal includes a positioning reference signal (PRS) or a sounding reference signal (SRS).

According to the positioning method based on a carrier phase provided in the embodiment of the present disclosure, more accurate carrier phase information may be obtained by performing measurement on the same frequency domain resource or different frequency domain resources based on the PRS and/or the SRS, so that the whole cycle part of the carrier phase is accurately determined, and the positioning accuracy for performing positioning based on the carrier phase is improved.

In an implementation, the first device is a terminal, and the second device is a core network device; or the first device is a TRP, and the second device is a core network device.

According to the positioning method based on a carrier phase provided in the embodiments of the present disclosure, the first device may be UE or a TRP, and the second device may be a core network device, so as to adapt to an uplink positioning solution or a downlink positioning solution. The positioning method may be applicable to various different positioning scenarios, so that the application range of the positioning measurement solution is wider.

FIG. 19 is another schematic diagram of a positioning apparatus 300 based on a carrier phase shown according to an example embodiment. Referring to FIG. 19, the apparatus 300 includes a receiving module 301, configured to receive a positioning report sent by a first device. The positioning report includes carrier phase information and a frequency domain resource identifier, where the carrier phase information includes at least one of a whole cycle part and a fractional part, and the frequency domain resource identifier is used to indicate a frequency domain resource identifier corresponding to the carrier phase information.

According to the positioning apparatus based on a carrier phase provided in the embodiments of the present disclosure, the carrier phase information of different frequency domain resources is identified by using the frequency domain resource identifier in the positioning report, so that the whole cycle part of the carrier phase is accurately determined by using the carrier phase information on different frequency domain resources, thus improving the positioning accuracy for performing positioning based on the carrier phase.

In an implementation, the frequency domain resource identifier includes at least one of: a subcarrier identifier, a resource block identifier, a resource block group identifier, a sub-band identifier, a bandwidth part (BWP) identifier, a component carrier identifier, or a frequency layer identifier.

The positioning apparatus based on the carrier phase provided by the embodiment of the present disclosure may be applicable to frequency resource of different sizes, so that the whole cycle part of the carrier phase may be accurately determined by using the carrier phase information on different frequency domain resources, thus improving the positioning accuracy for performing positioning based on a carrier phase.

In an implementation, the number of the frequency domain resource is one or more.

According to the positioning apparatus based on a carrier phase provided in the embodiments of the present disclosure, the carrier phase information may be obtained by performing measurement using one frequency domain resource or more than one frequency domain resource, so that the whole cycle part of the carrier phase is accurately determined, and the positioning accuracy for performing positioning based on a carrier phase is improved.

In an implementation, the carrier phase information includes at least one of: a carrier phase measurement value obtained by performing measurement based on one positioning signal, a difference between a reference carrier phase value and a carrier phase measurement value obtained by performing measurement based on one positioning signal, a difference between carrier phase measurement values obtained by performing measurement based on more than one positioning signal, or a difference between carrier phase measurement values obtained by performing measurement on different frequency domain resources based on one positioning signal.

According to the positioning apparatus based on a carrier phase provided in the embodiments of the present disclosure, the carrier phase information may be obtained by performing measurement on one or more different frequency domain resources using one positioning signal, or may be obtained by using one positioning signal and a reference carrier phase value, or may be obtained by performing measurement using more than one positioning signal. The positioning apparatus may be applied to various different positioning scenarios, and the application range of the positioning measurement solution may be expanded.

In an implementation, the difference between the carrier phase measurement values obtained by performing measurement based on more than one positioning signal includes at least one of: a difference between carrier phase measurement values obtained by performing measurement based on more than one downlink positioning signal; a difference between carrier phase measurement values obtained by performing measurement based on more than one uplink positioning signal; or, a difference between carrier phase measurement values obtained by performing measurement based on one downlink positioning signal and one uplink positioning signal.

According to the positioning apparatus based on a carrier phase provided in the embodiments of the present disclosure, the difference between the carrier phase measurement values may be obtained by performing measurement using an uplink positioning signal and/or a downlink positioning signal. The positioning apparatus may be applied to uplink positioning measurement and/or downlink positioning measurement, and may be applicable to various different positioning scenarios, so that the application range of the positioning measurement solution is wider.

In an implementation, the carrier phase information includes a difference between carrier phase measurement values obtained by performing measurement based on more than one positioning signal. For the difference between the carrier phase measurement values obtained by performing measurement based on more than one positioning signal, it may include that: the difference between the carrier phase measurement values obtained by performing measurement based on the more than one positioning signal corresponds to one frequency domain resource identifier; or, the difference between the carrier phase measurement values obtained by performing measurement based on the more than one positioning signal corresponds to more than one frequency domain resource identifier.

According to the positioning apparatus based on a carrier phase provided in the embodiments of the present disclosure, the carrier phase information may be obtained by performing measurement using different frequency domain resources based on one frequency domain resource identifier or more than one frequency domain resource identifier, so as to accurately determine the whole cycle part of the carrier phase, thus improving the positioning accuracy for performing positioning based on the carrier phase.

In an implementation, the more than one positioning signal include a reference positioning signal.

According to the positioning apparatus based on the carrier phase provided by the embodiment of the present disclosure, more than one positioning signal includes a reference positioning signal, so that the difference between the carrier phase measurement values may be more accurately obtained based on more than one positioning signal. For example, the carrier phase measurement value corresponding to the reference positioning signal is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In an implementation, the more than one positioning signal correspond to a same transmission reception point (TRP), or corresponds to different TRPs.

According to the positioning apparatus based on the carrier phase provided in the embodiment of the present disclosure, the more than one positioning signal may correspond to the same TRP or different TRPs, so that the positioning apparatus is applicable to various different positioning scenarios, and the application range of the positioning measurement solution is wider.

In an implementation, the more than one positioning signal correspond to different TRPs, and the different TRPs include a reference TRP.

According to the positioning apparatus based on the carrier phase provided in the embodiment of the present disclosure, different TRPs corresponding to more than one positioning signal may include a reference TRP, so that the difference between the carrier phase measurement values may be more accurately obtained based on more than one positioning signal. For example, the carrier phase measurement value of the positioning signal from the reference TRP is the reference carrier phase measurement value, and the difference between another carrier phase measurement value and the reference carrier phase measurement value is the difference between the carrier phase measurement values. Then, the carrier phase information is obtained, so that the whole cycle part of the carrier phase is accurately determined, thus improving the positioning accuracy for performing positioning based on the carrier phase.

In an implementation, the carrier phase information includes a difference between the carrier phase measurement values obtained by performing measurement on different frequency domain resources based on one positioning signal, and the difference between the carrier phase measurement values obtained by performing measurement on different frequency domain resources based on one positioning signal corresponds to more than one frequency domain resource identifier.

According to the positioning apparatus based on a carrier phase provided in the embodiments of the present disclosure, the carrier phase information may be obtained by performing measurement on different frequency domain resources using one positioning signal based on different frequency domain resource identifiers, thus the whole cycle part of the carrier phase may be accurately determined, and the positioning accuracy for performing positioning based on the carrier phase may be improved.

In an implementation, the apparatus 300 further includes a sending module 302, configured to send configuration information to the first device, where the configuration information is used to indicate a configuration parameter of the positioning signal.

According to the positioning apparatus based on a carrier phase provided in the embodiments of the present disclosure, the configuration parameter for indicating the positioning signal may be sent, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In an implementation, the configuration information includes at least one of: a periodicity of the positioning signal, a slot offset of the positioning signal, a repetition number of the positioning signal within a single cycle, a time interval between every two repeated transmissions of the positioning signal, a number of symbols occupied by the positioning signal, a muting pattern of the positioning signal, a comb-size of the positioning signal, a starting symbol position of the positioning signal, an subcarrier spacing (SCS) of the positioning signal, quasi-co-location (QCL) information of the positioning signal, a number of samples for measurement according to the positioning signal, a bandwidth of the positioning signal, a starting physical resource block (PRB) position of the positioning signal, a transmission power for the positioning signal, or a pathloss reference signal of the positioning signal.

According to the positioning apparatus based on the carrier phase provided in the embodiment of the present disclosure, a plurality of configuration parameters of the positioning signal are provided, so that more accurate carrier phase information may be obtained by using the positioning signal on the same frequency domain resource or different frequency domain resources, thus accurately determining the whole cycle part of the carrier phase, and improving the positioning accuracy for performing positioning based on the carrier phase.

In an implementation, the positioning report further includes at least one of: carrier phase error group information, measurement result information, a probability that a path corresponding to the carrier phase information is a line-of-sight (LoS) path, or corresponding Doppler parameter information.

According to the positioning apparatus based on a carrier phase provided in the embodiments of the present disclosure, the positioning report may further include a plurality of different pieces of information. In this way, the network device, for example, the core network device, may accurately determine the whole cycle part of the carrier phase based on the positioning report, thus improving the positioning accuracy for performing positioning based on the carrier phase.

In an implementation, the measurement result information includes at least one of: a reference signal receiving power (RSRP), an angle of arrival (AoA), an angle of departure (AoD), a time of arrival (ToA), a time difference of arrival (TDoA), a downlink reference signal time difference (RSTD), an uplink relative time of arrival, a receiving (Rx) transmitting (Tx) time difference of the first device or the second device, a round trip time (RTT), a Tx time error group (TEG) of the first device or the second device, a Rx time error group (REG) of the first device or the second device, or, a Tx Rx time error group (TREG) of the first device or the second device.

According to the positioning apparatus based on a carrier phase provided in the embodiments of the present disclosure, the measurement result information may further include a plurality of different pieces of information. In this way, the network device, for example, the core network device, may accurately determine the whole cycle part of the carrier phase based on the positioning report, thus improving the positioning accuracy for performing positioning based on the carrier phase.

In an implementation, the positioning signal includes a positioning reference signal (PRS) or a sounding reference signal (SRS).

According to the positioning apparatus based on the carrier phase provided in the embodiment of the present disclosure, more accurate carrier phase information may be obtained by performing measurement on the same frequency domain resource or different frequency domain resources based on the PRS and/or the SRS, so that the whole cycle part of the carrier phase is accurately determined, and the positioning accuracy for performing positioning based on the carrier phase is improved.

In an implementation, the first device is a terminal, and the second device is a core network device; or the first device is a TRP, and the second device is a core network device.

According to the positioning apparatus based on a carrier phase provided in the embodiments of the present disclosure, the first device may be UE or a TRP, and the second device may be a core network device, so as to adapt to an uplink positioning solution or a downlink positioning solution. The positioning apparatus may be applicable to various different positioning scenarios, so that the application range of the positioning measurement solution is wider.

With regard to the apparatus in the above embodiments, the specific manner in which the modules perform operations has been described in detail in the embodiments related to the method, which will not be described in detail here.

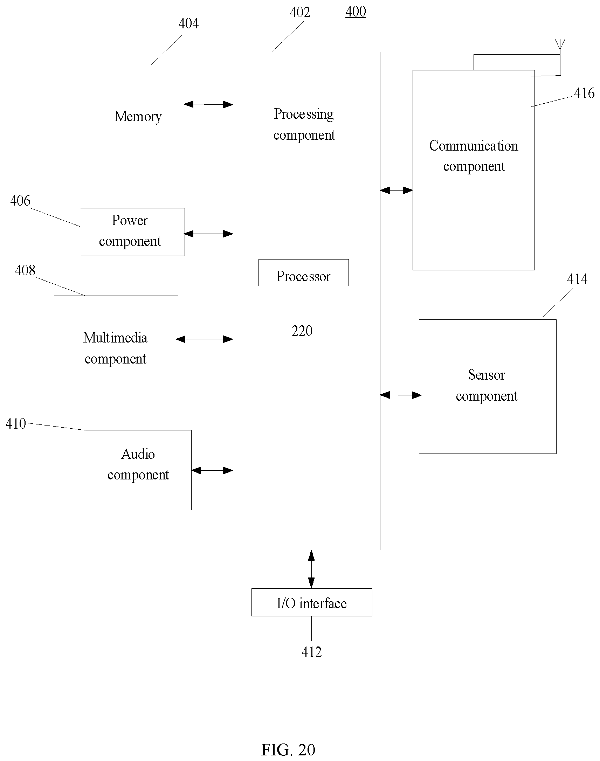

FIG. 20 is another schematic diagram of a positioning apparatus 400 based on a carrier phase shown according to an example embodiment. For example, the apparatus 400 may be a mobile phone, a computer, a digital broadcast terminal, a message transceiver device, a game console, a tablet device, a medical device, an exercise device, a personal digital assistant, or the like.

In some embodiments, the apparatus 400 may alternatively be a TRP.

Referring to FIG. 20, the apparatus 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls overall operations of the apparatus 400, such as operations associated with display, telephone calls, data communications, camera operations, and recording operations. The processing component 402 may include one or more processors 420 to execute instructions to complete all or part of the steps of the above positioning method based on a carrier phase. In addition, the processing component 402 may include one or more modules to facilitate interaction between the processing component 402 and other components. For example, the processing component 402 may include a multimedia module to facilitate interaction between the multimedia component 408 and the processing component 402.

The memory 404 is configured to store various types of data to support the operations of the apparatus 400. Examples of such data include instructions of any application or method operating on apparatus 400, contact data, phonebook data, messages, pictures, videos, etc. The memory 404 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 406 provides power to various components of the apparatus 400. The power component 406 may include a power management system, one or more power supplies, and other components associated with generation, management, and distribution of power for the apparatus 400.

The multimedia component 408 includes a screen providing an output interface between the apparatus 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense a boundary of a touch or slide action, but also detect a duration and pressure associated with the touch or slide action. In some embodiments, the multimedia component 408 includes a front camera and/or a rear camera. The front camera and/or the rear camera may receive external multimedia data when the apparatus 400 is in an operation mode, such as a photographing mode or a video mode. Each of the front camera and the rear camera may be a fixed optical lens system or have focal length and optical zoom capability.

The audio component 410 is configured to output and/or input audio signals. For example, the audio component 410 includes a microphone (MIC) configured to receive an external audio signal when the apparatus 400 is in an operation mode, such as a call mode, a recording mode, and a speech recognition mode. The received audio signal may be further stored in the memory 404 or transmitted via the communication component 416. In some embodiments, the audio component 410 further includes a speaker to output audio signals.

The I/O interface 412 provides an interface between the processing component 402 and a peripheral interface module, which may be a keyboard, a click wheel, a button, or the like. The button may include, but is not limited to, a home button, a volume button, a starting button, or a locking button.

The sensor component 414 includes one or more sensors to provide status assessments of various aspects of the apparatus 400. For example, the sensor component 414 may detect the on/off state of the apparatus 400, the relative positioning of the components, such as the display and keypad of the apparatus 400. The sensor component 414 may also detect the position change of the apparatus 400 or one component of the apparatus 400, the presence or absence of contact by the user with the apparatus 400, the orientation or acceleration/deceleration of the apparatus 400, and the temperature change of the apparatus 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may further include an acceleration sensor, a gyroscope sensor, a magnetic sensor, a pressure sensor, or a temperature sensor.

The communication component 416 is configured to facilitate wired or wireless communication between the apparatus 400 and other devices. The apparatus 400 may access a wireless network based on a communication standard, such as WiFi, 2G, or 3G, or a combination of them. In an example embodiment, the communication component 416 receives a broadcast signal or broadcast related information from an external broadcast management system via a broadcast channel. In an example embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In an example embodiment, the apparatus 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above-described positioning method based on a carrier phase.

In an example embodiment, there is further provided a non-transitory computer-readable storage medium including an instruction, for example, a memory 404 including an instruction. The instruction may be executed by the processor 420 of the apparatus 400 to complete the above-mentioned positioning method based on a carrier phase. For example, the non-transitory computer-readable storage medium may be a ROM, a random access memory (RAM), a CD-ROM, a magnetic tape, a floppy disk, an optical data storage device, or the like.

It may be understood that, in some embodiments, if the apparatus 400 is a TRP, the apparatus 400 may not have some components shown in FIG. 20, such as the multimedia component and the audio component, etc. Specifically, according to the actual situation, any component may be deleted, or a possibly needed component may be added, which is not limited in the present disclosure.

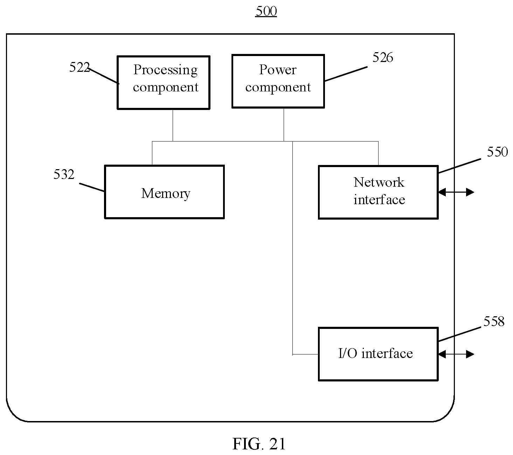

FIG. 21 is another schematic diagram of a positioning apparatus 500 based on a carrier phase shown according to an example embodiment. For example, the apparatus 500 is a network device. For example, the apparatus 500 may be provided as a core network device, or a base station or a server. Referring to FIG. 21, the apparatus 500 includes a processing component 522 that further includes one or more processors, and memory resources represented by the memory 532 for storing instructions executable by the processing component 522, such as applications. The application stored in the memory 532 may include one or more modules each corresponding to a set of instructions. In addition, the processing component 522 is configured to execute the instructions to perform the method corresponding to the second device in the positioning method based on a carrier phase.

The apparatus 500 may also include a power component 526 configured to perform power management of the apparatus 500, a wired or wireless network interface 550 configured to connect the apparatus 500 to a network, and an input/output (I/O) interface 558. The apparatus 500 is operable based on an operating system stored in the memory 532, such as, Windows ServerTM, Mac OS XTM, UnixTM, LinuxTM, FreeBSDTM, or the like.

In the present disclosure, the carrier phase information of different frequency domain resources may be identified by using the frequency domain resource identifier in the positioning report, so that the whole cycle part of the carrier phase is accurately determined by using the carrier phase information on different frequency domain resources, thus improving the positioning accuracy for performing positioning based on the carrier phase.

It may be further understood that the term "more than one" in the present disclosure refers to two or more, and other quantifiers are similar to it. The term "and/or" for describing an association relationship between associated objects, indicates that there may be three relationships. For example, A and/or B may indicate that A exists alone, A and B exist at the same time, and B exists alone. The character "/" generally indicates an "or" relationship between the associated objects before and after. The singular forms "a", "said", and "the" are intended to include the plural forms as well, unless the context clearly indicates other meanings.

It may be further understood that the terms "first", "second", or the like are used to describe various information, but these information should not be limited to these terms. These terms are only used to distinguish the same type of information from each other, and do not represent a particular order or degree of importance. In fact, expressions with "first" and "second" may be used interchangeably. For example, the first information may also be referred to as second information without departing from the scope of the present disclosure, and similarly, the second information may also be referred to as first information.

It should be further understood that although the operations are described in a specific order in the accompanying drawings, it should not be understood that these operations are required to be performed in the specific order or the serial order as shown, or all illustrated operations are required to be performed to obtain a desired result. In a particular environment, multitasking and parallel processing may be advantageous.

Other embodiments of the present disclosure will be apparent to those skilled in the art from consideration of the description and practice of the invention disclosed here. The present application is intended to cover any variations, uses, or adaptations of the present disclosure following the general principles of the present disclosure and including common general knowledge and conventional technical means in the art that are not disclosed in the present disclosure.

It should be understood that the present disclosure is not limited to the precise structures that have been described above and shown in the accompanying drawings, and various modifications and changes may be made without departing from the scope of the present disclosure. The scope of the present disclosure is limited only by the appended claims.

## Claims

1. A positioning method based on a carrier phase, applied to a first device, and comprising:
sending a positioning report to a second device, wherein the positioning report comprises carrier phase information and a frequency domain resource identifier;
wherein the carrier phase information comprises at least one of a whole cycle part or a fractional part, and the frequency domain resource identifier is used to indicate a frequency domain resource identifier corresponding to the carrier phase information.

2. The positioning method according to claim 1, wherein the frequency domain resource identifier comprises at least one of:
a subcarrier identifier;
a resource block identifier;
a resource block group identifier;
a sub-band identifier;
a bandwidth part (BWP) identifier;
a component carrier identifier; or
a frequency layer identifier.

3. The positioning method according to claim 1 or 2, wherein a number of a frequency domain resource is one or more.

4. The positioning method according to any one of claims 1 to 3, wherein the carrier phase information comprises at least one of:
a carrier phase measurement value obtained by performing measurement based on one positioning signal;
a difference between a reference carrier phase value and a carrier phase measurement value obtained by performing measurement based on one positioning signal;
a difference between carrier phase measurement values obtained by performing measurement based on more than one positioning signal; or
a difference between carrier phase measurement values obtained by performing measurement on different frequency domain resources based on one positioning signal.

5. The positioning method according to claim 4, wherein the difference between the carrier phase measurement values obtained by performing measurement based on more than one positioning signal comprises at least one of:
a difference between carrier phase measurement values obtained by performing measurement based on more than one downlink positioning signal;
a difference between carrier phase measurement values obtained by performing measurement based on more than one uplink positioning signal; or
a difference between carrier phase measurement values obtained by performing measurement based on one downlink positioning signal and one uplink positioning signal.

6. The positioning method according to claim 4 or 5, wherein the carrier phase information comprises the difference between the carrier phase measurement values obtained by performing measurement based on more than one positioning signal; and
the difference between the carrier phase measurement values obtained by performing measurement based on more than one positioning signal comprises:
the difference between the carrier phase measurement values obtained by performing measurement based on more than one positioning signal corresponding to one frequency domain resource identifier; or
the difference between the carrier phase measurement values obtained by performing measurement based on more than one positioning signal corresponding to more than one frequency domain resource identifier.

7. The positioning method according to any one of claims 4 to 6, wherein the more than one positioning signal comprises a reference positioning signal.

8. The positioning method according to any one of claims 4 to 7, wherein the more than one positioning signal corresponds to a same transmission reception point (TRP), or corresponds to different TRPs.

9. The positioning method according to claim 8, wherein the more than one positioning signal corresponds to different TRPs, and the different TRPs comprise a reference TRP.

10. The positioning method according to claim 4, wherein the carrier phase information comprises the difference between the carrier phase measurement values obtained by performing measurement on different frequency domain resources based on one positioning signal; and
the difference between the carrier phase measurement values obtained by performing measurement on different frequency domain resources based on one positioning signal corresponds to more than one frequency domain resource identifier.

11. The positioning method according to any one of claims 1 to 10, wherein the method further comprises:
receiving configuration information sent by the second device, wherein the configuration information is used to indicate a configuration parameter of a positioning signal.

12. The positioning method according to claim 11, wherein the configuration information comprises at least one of:
a periodicity of the positioning signal;
a slot offset of the positioning signal;
a repetition number of the positioning signal within a single cycle;
a time interval between every two repeated transmissions of the positioning signal;
a number of symbols occupied by the positioning signal;
a muting pattern of the positioning signal;
a comb-size of the positioning signal;
a starting symbol position of the positioning signal;
a subcarrier spacing (SCS) of the positioning signal;
quasi-co-location (QCL) information of the positioning signal;
a number of samples for measurement according to the positioning signal;
a bandwidth of the positioning signal;
a starting physical resource block (PRB) position of the positioning signal;
a transmission power for the positioning signal; or
a pathloss reference signal of the positioning signal.

13. The positioning method according to any one of claims 1 to 12, wherein the positioning report further comprises at least one of:
carrier phase error group information;
measurement result information;
a probability that a path corresponding to the carrier phase information is a line-of-sight (LoS) path; or
Doppler parameter information.

14. The positioning method according to claim 13, wherein the measurement result information comprises at least one of:
a reference signal receiving power (RSRP);
an angle of arrival (AoA);
an angle of departure (AoD);
a time of arrival (ToA);
a time difference of arrival (TDoA);
a downlink reference signal time difference (RSTD);
an uplink relative time of arrival;
a receiving (Rx) transmitting (Tx) time difference of the first device or the second device;
a round trip time (RTT);
a Tx time error group (TEG) of the first device or the second device;
a Rx time error group (REG) of the first device or the second device; or
a Tx Rx time error group (TREG) of the first device or the second device.

15. The positioning method according to any one of claims 4 to12, wherein the positioning signal comprises a positioning reference signal (PRS) or a sounding reference signal (SRS).

16. The positioning method according to any one of claims 1 to 15, wherein the first device is a terminal, and the second device is a core network device; or
the first device is a TRP, and the second device is a core network device.

17. A positioning method based on a carrier phase, applied to a second device, and comprising:
receiving a positioning report sent by a first device, wherein the positioning report comprises carrier phase information and a frequency domain resource identifier;
wherein the carrier phase information comprises at least one of a whole cycle part and a fractional part, and the frequency domain resource identifier is used to indicate a frequency domain resource identifier corresponding to the carrier phase information.

18. The positioning method according to claim 17, wherein the frequency domain resource identifier comprises at least one of:
a subcarrier identifier;
a resource block identifier;
a resource block group identifier;
a sub-band identifier;
a bandwidth part (BWP) identifier;
a component carrier identifier; or
a frequency layer identifier.

19. The positioning method according to claim 17 or 18, wherein a number of a frequency domain resource is one or more.

20. The positioning method according to any one of claims 17 to 19, wherein the carrier phase information comprises at least one of:
a carrier phase measurement value obtained by performing measurement based on one positioning signal;
a difference between a reference carrier phase value and a carrier phase measurement value obtained by performing measurement based on one positioning signal;
a difference between carrier phase measurement values obtained by performing measurement based on more than one positioning signal; or
a difference between carrier phase measurement values obtained by performing measurement on different frequency domain resources based on one positioning signal.

21. The positioning method according to claim 20, wherein the difference between the carrier phase measurement values obtained by performing measurement based on more than one positioning signal comprises at least one of:
a difference between carrier phase measurement values obtained by performing measurement based on more than one downlink positioning signal;
a difference between carrier phase measurement values obtained by performing measurement based on more than one uplink positioning signal; or
a difference between carrier phase measurement values obtained by performing measurement based on one downlink positioning signal and one uplink positioning signal.

22. The positioning method according to claim 20 or 21, wherein the carrier phase information comprises the difference between the carrier phase measurement values obtained by performing measurement based on more than one positioning signal; and
the difference between the carrier phase measurement values obtained by performing measurement based on more than one positioning signal comprises:
the difference between the carrier phase measurement values obtained by performing measurement based on more than one positioning signal corresponding to one frequency domain resource identifier; or
the difference between the carrier phase measurement values obtained by performing measurement based on more than one positioning signal corresponding to more than one frequency domain resource identifier.

23. The positioning method according to any one of claims 20 to 22, wherein the more than one positioning signal comprise a reference positioning signal.

24. The positioning method according to any one of claims 20 to 23, wherein the more than one positioning signal correspond to a same transmission reception point (TRP), or corresponds to different TRPs.

25. The positioning method according to claim 24, wherein the more than one positioning signal correspond to different TRPs, and the different TRPs comprise a reference TRP.

26. The positioning method according to claim 20, wherein the carrier phase information comprises the difference between the carrier phase measurement values obtained by performing measurement on different frequency domain resources based on one positioning signal; and
the difference between the carrier phase measurement values obtained by performing measurement on different frequency domain resources based on one positioning signal corresponds to more than one frequency domain resource identifier.

27. The positioning method according to any one of claims 17 to 26, wherein the method further comprises:
sending configuration information to the first device, wherein the configuration information is used to indicate a configuration parameter of a positioning signal.

28. The positioning method according to claim 27, wherein the configuration information comprises at least one of:
a periodicity of the positioning signal;
a slot offset of the positioning signal;
a repetition number of the positioning signal in a single cycle;
a time interval between every two repeated transmissions of the positioning signal;
a number of symbols occupied by the positioning signal;
a muting pattern of the positioning signal;
a comb-size of the positioning signal;
a starting symbol position of the positioning signal;
a subcarrier spacing (SCS) of the positioning signal;
quasi-co-location (QCL) information of the positioning signal;
a number of samples for measurement according to the positioning signal;
a bandwidth of the positioning signal;
a position of a start physical resource block (PRB) of the positioning signal;
a transmission power for the positioning signal; or
a pathloss reference signal of the positioning signal.

29. The positioning method according to any one of claims 17 to 28, wherein the positioning report further comprises at least one of:
carrier phase error group information;
measurement result information;
a probability that a path corresponding to the carrier phase information is a line-of-sight (LoS) path; or
Doppler parameter information.

30. The positioning method according to claim 29, wherein the measurement result information comprises at least one of:
a reference signal receiving power (RSRP);
an angle of arrival (AoA);
an angle of departure (AoD);
a time of arrival (ToA);
a time difference of arrival (TDoA);
a downlink reference signal time difference (RSTD);
an uplink relative time of arrival;
a round trip time (RTT);
a Tx time error group (TEG) of the first device or the second device;
a Rx time error group (REG) of the first device or the second device; or
a Tx Rx time error group (TREG) of the first device or the second device.

31. The positioning method according to any one of claims 20 to 28, wherein the positioning signal comprises a positioning reference signal (PRS) or a sounding reference signal (SRS).

32. The positioning method according to any one of claims 17 to 31, wherein the first device is a terminal, and the second device is a core network device; or
the first device is a TRP, and the second device is a core network device.

33. A positioning apparatus based on a carrier phase, comprising:
a sending module, configured to send a positioning report to a second device, wherein the positioning report comprises carrier phase information and a frequency domain resource identifier;
wherein the carrier phase information comprises at least one of a whole cycle part and a fractional part, and the frequency domain resource identifier is used to indicate a frequency domain resource identifier corresponding to the carrier phase information.

34. A positioning apparatus based on a carrier phase, comprising:
a receiving module, configured to receive a positioning report sent by a first device, wherein the positioning report comprises carrier phase information and a frequency domain resource identifier;
wherein the carrier phase information comprises at least one of a whole cycle part and a fractional part, and the frequency domain resource identifier is used to indicate a frequency domain resource identifier corresponding to the carrier phase information.

35. A positioning apparatus based on a carrier phase, comprising:
a processor; and
a memory, configured to store an instruction executable by the processor;
wherein the processor is configured to perform the method according to any one of claims 1 to 16.

36. A positioning apparatus based on a carrier phase, comprising:
a processor; and
a memory, configured to store an instruction executable by the processor;
wherein the processor is configured to perform the method according to any one of claims 17 to 32.

37. A non-transitory computer-readable storage medium, wherein, when an instruction in the storage medium is executed by a processor of a first device, the first device is caused to perform the method according to any one of claims 1 to 16.

38. A non-transitory computer-readable storage medium, wherein, when an instruction in the storage medium is executed by a processor of a second device, the second device is caused to perform the method according to any one of claims 17 to 32.
